# EUROPEAN PATENT APPLICATION

(11) **EP 1 848 240 A2**
(43) Date of publication of application: **24.10.2007**
(21) Application number: 07106357.2
(22) Date of filing: 17.04.2007
(51) Int. Cl.: H04Q 7/38

(54) **Method and system using an Out-of-Band approach for providing value added services without using prefix**

(30) Priority: 17.04.2006 US 792334 P
(71) Applicant: Roamware, Inc., San Jose, CA 95128 (US)
(72) Inventor: Jiang, Yue Jun, Danville, CA 94506 (US)
(74) Representative: Wallis, Helen Frances Mary

(57) **Abstract**

The present invention proposes a method for providing Value Added Services (VAS) to a subscriber without using prefix. The method includes intercepting a call control associated with a call from the subscriber to a recipient, at an Interceptor unit, while a voice circuit associated with the call is held at a switch, without answering the voice circuit. The subscriber calls a recipient's number without any prefix. Further, the method includes sending a message by an intelligent interactive unit to the subscriber for making an indication of a service selection by presenting a user interactive menu in the message. The separate channel is established in parallel with the voice circuit. The method further includes sending by the intelligent interactive unit, the indication of the service selection, received in an acknowledgment to the message, to the Interceptor unit. Furthermore, the method includes determining by the Interceptor unit, a service application using the indication of the service selection.

## Description

### Related Applications

This application claims the benefit of United States Provisional Patent Application Serial Number 60/792,334, entitled "A Post-Fixed Approach to Network-Based Call Related Value Added Services", filed on April 17, 2006. Further, this application is related to United States Patent Application Serial Number 09/932,439, entitled "System and method for Wireless voice channel data integration", filed on August 16, 2001, claiming priority from 60/226,255. Further, this application is also related to United States Patent Application Number 11/520,799, entitled "Voice SMS and Video SMS", filed on September 14, 2006. Further, this application is also related to United States Patent Application Number 11/520,795, entitled "Color Multimedia Message", filed September 14, 2006. Further, this application is also related to United States Patent Application Number 11/520,794, entitled "Session-Based Multimedia Messaging Service", filed September 14, 2006. Further this application is also related to United States Patent Application Number 11/708,679, entitled "Method and System for Sending and Creating Expressive Messages", filed on February 21, 2007. Further, this application is also related to United States Patent Application Number 11/443,434, entitled "Method and System for Call-Setup Triggered Push Content", filed on May 31, 2006, claiming priority from Application Number 60/595,032, filed May 31, 2005 and is related to Application No. 09/932,439, filed August 16, 2001. Further, this application claims the benefit of United States Provisional Patent Application Number 60/596,892, entitled "Personalized Ring Forward Tones." The aforementioned patent applications are incorporated herein by this reference in their entireties.

### Field of the Invention

The present invention relates to providing value added services (VAS) to subscribers in communication networks. More specifically, the invention relates to providing value added services without using a prefix.

### Background of the Invention

Mobile communication services are becoming increasingly popular and there is increased competition among mobile service providers to attract more subscribers to increase their revenue. Consequently, many mobile service providers offer value added services to their subscribers. These value added services encourage subscribers to increase their mobile phone usage, and to use their mobile phones for purposes beyond voice calls and text messaging, thereby driving up revenue of the mobile service providers. Typically, value added services are classified as call-related and non call-related value added services. Some examples of such value added services are voice Short Message Service (SMS), background music, color SMS, and Unstructured Supplementary Services Data (USSD) call me service.

Many existing techniques for providing these value added services use a prefix-based approach. In a prefix-based approach, the subscriber either prefixes a recipient's number with a short code or dials a service number (e.g. an 800 number) of a desired value added service application to enter the recipient's number, or sends a Short Message Service (SMS) to the desired value added service application with the recipient's number. For example, the subscriber needs to prefix the recipient's number with "*" to activate a voice SMS application to deposit a voice message for the recipient. The voice SMS application would then notify the recipient through an SMS about the deposited voice message. However, a major disadvantage of the prefix-based approach is that the subscriber cannot use his phone address book or call log lists, such as calls made, calls received, and missed calls, to dial the recipient's number, as entries in the phone address book and the call log lists do not contain prefixes corresponding to the prefix-based value added services. Moreover, it is not practical to create duplicate phone book entries with prefixes for each of the prefix-based value added services. Furthermore, the subscribers may not always remember the prefixes corresponding to the value added service they wish to obtain.

In some countries such as Brazil, by regulation, a local subscriber must explicitly specify a long distance carrier with a prefix of carrier-selection code for every long distance call the local subscriber makes. The local subscriber cannot use phone book entries easily. Although it is possible to create a phone book entry for each carrier selection code for each recipient number, for a received call or missed call from a long distance caller in the country, the caller ID still does not carry the carrier-selection code. As a result, if the recipient wants to call back the caller from call logs (including calls made, received and missed), he will have to edit the phone number in the call logs(if his phone supports editing capability) or reenter the phone number (if the phone does not support the editing capability) with carrier-selection code prefix. This leads to a poor user.

Some other techniques for providing value added services employ an Interactive Voice Response (IVR) system. The subscriber dials the recipient's number without any prefix. The IVR system allows the subscriber to select a desired value added service once the call reaches the IVR system. However, deployment of the IVR system is a costly proposition for the operator. Furthermore, since the IVR system gives available service options to the subscriber as voice menu during the call, the subscriber may not always remember all the available service options, in particular, if a long list of all the available service options is read to the subscriber. If the subscriber does not remember the service options, then he may either have to exit the current call, or redial to listen again to the voice menu. This may turn into an inferior user experience.

One or more of the above techniques are inconvenient for the subscriber or costly to the operator. Hence, there is a need in the art for a convenient and cost effective solution for providing value added services to the subscriber without the requirement of dialing a prefix, and with a better user interface for implementing the same.

### Summary

The present invention generally relates to a method, system, user interface and computer program product for providing Value Added Services (VAS) without requiring the user to dial a prefix. The method includes intercepting a call control associated with a call from the subscriber to a recipient, at an Interceptor unit, while a voice circuit associated with the call is held at a switch, without answering the voice circuit. The subscriber calls the recipient's number without any prefix. The method further includes sending a message by an intelligent interactive unit to the subscriber for making an indication of a service selection by presenting a user interactive menu in the message. The separate channel is established in parallel with the voice circuit. The method further includes sending by the intelligent interactive unit, the indication of the service selection, received in an acknowledgment to the message, to the Interceptor unit. The method further includes determining by the Interceptor unit, a service application using the indication of the service selection.

The invention proposes a system for facilitating Value Added Services (VAS) without using prefix. The system includes an Interceptor unit for intercepting call control associated with a call from the subscriber to a recipient, while a voice circuit associated with the call is held at a switch, without answering the voice circuit. The subscriber calls a recipient's number without any prefix. The system further includes an intelligent interactive unit for sending a message to the subscriber on a separate channel to prompt the subscriber for making an indication of a service selection by presenting a user interactive menu in the message. The separate channel is established in parallel with the voice circuit. The intelligent interactive unit further sends the indication of the service selection to the Interceptor unit. The Interceptor unit further determines a service application using the indication of service selection.

The invention proposes a user interface in a mobile device for prompting a subscriber to make an indication of service selection on a separate channel, when the subscriber initiates a call to a recipient by calling the recipient number without any prefix. The separate channel is established in parallel with a voice circuit associated with the call. The voice circuit is held at a switch without answering the voice circuit. The user interface includes a display unit for displaying a user interactive menu.

The invention proposes a computer program product for providing Value Added Services (VAS) to a subscriber. The computer program product includes a computer usable medium including a computer usable program code for intercepting a call control associated with a call from the subscriber to a recipient, at an Interceptor unit, while a voice circuit associated with the call is held at a switch, without answering the voice circuit. The subscriber calls a recipient's number without any prefix. The computer usable medium further includes a computer usable program code for sending a message by an intelligent interactive unit to the subscriber on a separate channel to prompt the subscriber for making an indication of a service selection by presenting a user interactive menu in the message. The separate channel is established in parallel with the voice circuit. The computer usable medium further includes a computer usable program code for sending by intelligent interactive unit, the indication of the service selection, received in an acknowledgement to the message, to the Interceptor unit. The computer usable medium further includes a computer usable program code for determining by the Interceptor unit, a service application using the indication of the service selection.

An aspect of the invention provides a method for providing value added services to a subscriber of a mobile communications network, the method comprising: intercepting a communication from the subscriber; providing a prompt for service selection to the subscriber; receiving an indication of service selection; and determining a service application based on the received indication of service selection; wherein the communication from the subscriber and the prompt for service selection are provided over separate channels.

Another aspect provides a method for providing non-prefix based value added services to a subscriber of a mobile communications network having an interceptor unit, the method comprising: intercepting a non-prefix communication from the subscriber; providing a prompt for service selection to the subscriber; receiving an indication of service selection from the subscriber at the interceptor unit; and determining a service application based on the received indication of service selection; wherein the service application is a non-prefix based value added service; and wherein the non-prefix communication and the prompt for service selection are provided over separate channels.

The method may further comprise: initiating the service application.

The prompt for service selection may be received over an out-of-band channel.

The separate channels may functional in parallel.

The non-prefix based value added service may be related to the non-prefix communication.

The non-prefix based value added service may be unrelated to the non-prefix communication.

The non-prefix communication may have an associated voice circuit, and intercepting a non-prefix communication may include: intercepting the associated voice circuit; and holding the intercepted voice circuit for a pre-defined time interval.

The associated voice circuit may be intercepted at a switch.

The method may further comprise: at the interceptor unit, applying a filtering criterion to the non-prefix communication.

The non-prefix communication may be initiated using a telephone number received from a group consisting of an address book, a number list, and a telephone pad.

The interceptor unit may be an Intelligent Service Control Point (ISCP).

The prompt for service selection may be an interactive menu.

A standby interceptor unit may be provided for failover support.

The method may further comprise: providing a prompt for carrier selection code to the subscriber.

Another aspect provides a method for providing value added services to a subscriber of a mobile communications network, the method comprising: intercepting a communication request from the subscriber, including an indication of a destination of the communication request; providing an option for selection of a communications service to the subscriber; receiving an indication of selection of the communications service; and operating a service application based on the received indication of selection of the communications service; wherein the communication request and the option for selection of a communications service are provided over separate channels.

The service application may be voice Short Message Service (SMS).

The service application may be one of:
- adding media to a subscriber communication
- monitoring a communications session for voice analysis
- monitoring a voice communications session to detect lies
- monitoring a voice communications session for emotion
- analyzing the language of a text message for meaning and adding media to that text message according to the meaning; and
- recognizing music.

The option may be a visual indication of service selection choices or an audible prompt.

The indication of selection may be a character entered on the subscriber's handset or may be spoken by the subscriber.

A further aspect provides a system for providing non-prefix based value added services to a subscriber of a mobile communications network having an interceptor unit, the system comprising: means for intercepting a non-prefix communication from the subscriber; means for providing a prompt for service selection to the subscriber; means for receiving an indication of service selection from the subscriber at the interceptor unit; and means for determining a service application based on the received indication of service selection; wherein the service application is a non-prefix based value added service; and wherein the non-prefix communication and the prompt for service selection are provided over separate channels.

The system may further comprise: means for initiating the service application.

The prompt for service selection may be received over an out-of-band channel.

The separate channels may functional in parallel.

The non-prefix based value added service may be related to or unrelated to the non-prefix communication.

The non-prefix communication may have an associated voice circuit, and the means for intercepting a non-prefix communication may include: means for intercepting the associated voice circuit; and means for holding the intercepted voice circuit for a pre-defined time interval.

The associated voice circuit may be intercepted at a switch.

The system may further comprise: means for applying a filtering criterion to the non-prefix communication.

The non-prefix communication may be initiated using a telephone number received from a group consisting of an address book, a number list, and a telephone pad.

The interceptor unit may be an Intelligent Service Control Point (ISCP).

The prompt for service selection may be an interactive menu.

A standby interceptor unit may be provided for failover support.

The system may further comprise: providing a prompt for carrier selection code to the subscriber.

Another aspect provides a system for providing value added services to a subscriber of a mobile communications network, the system comprising: means for intercepting a communication request from the subscriber, including an indication of a destination of the communication request; means for providing an option for selection of a communications service to the subscriber; means for receiving an indication of selection of the communications service; and means for operating a service application based on the received indication of selection of the communications service; wherein the communication request and the option for selection of a communications service are provided over separate channels.

The service application may be voice Short Message Service (SMS).

The service application may be one of:
- adding media to a subscriber communication
- monitoring a communications session for voice analysis
- monitoring a voice communications session to detect lies
- monitoring a voice communications session for emotion
- analyzing the language of a text message for meaning and adding media to that text message according to the meaning; and
- recognizing music.

The option may be a visual indication of service selection choices or an audible prompt.

The indication of selection may be a character entered on the subscriber's handset or may be spoken by the subscriber.

A further aspect provides a computer program product comprising a computer usable medium having control logic stored therein for causing a computer to provide non-prefix based value added services to a subscriber of a mobile communications network having an interceptor unit, the control logic comprising: first computer readable program code means for intercepting a non-prefix communication from the subscriber; second computer readable program code means for providing a prompt for service selection to the subscriber; third computer readable program code means for receiving an indication of service selection from the subscriber at the interceptor unit; and fourth computer readable program code means for determining a service application based on the received indication of service selection; wherein the service application is a non-prefix based value added service; and wherein the non-prefix communication and the prompt for service selection are provided over separate channels.

The computer program product may further comprise: fifth computer readable program code means for initiating the service application.

The prompt for service selection may be received over an out-of-band channel.

The separate channels may functional in parallel.

The non-prefix based value added service may be related to or unrelated to the non-prefix communication.

The non-prefix communication may have an associated voice circuit, and the first computer readable program code means for intercepting a non-prefix communication may include: fifth computer readable program code means for intercepting the associated voice circuit; and sixth computer readable program code means for holding the intercepted voice circuit for a pre-defined time interval.

The associated voice circuit may be intercepted at a switch.

The control logic may further comprise: fifth computer readable program code means for applying a filtering criterion to the non-prefix communication.

The non-prefix communication may be initiated using a telephone number received from a group consisting of an address book, a number list, and a telephone pad.

The interceptor unit may be an Intelligent Service Control Point (ISCP).

The prompt for service selection may be an interactive menu.

A standby interceptor unit may be provided for failover support.

The control logic may further comprise: fifth computer readable program code providing a prompt for carrier selection code to the subscriber.

A yet further aspect provides a computer program product comprising a computer usable medium having control logic stored therein for causing a computer to provide value added services to a subscriber of a mobile communications network, the control logic comprising: first computer readable program code means for intercepting a communication request from the subscriber, including an indication of a destination of the communication request; second computer readable program code means for providing an option for selection of a communications service to the subscriber; third computer readable program code means for receiving an indication of selection of the communications service; and fourth computer readable program code means for operating a service application based on the received indication of selection of the communications service; wherein the communication request and the option for selection of a communications service are provided over separate channels.

The service application may be voice Short Message Service (SMS) .

The service application may be one of:
- adding media to a subscriber communication
- monitoring a communications session for voice analysis
- monitoring a voice communications session to detect lies
- monitoring a voice communications session for emotion
- analyzing the language of a text message for meaning and adding media to that text message according to the meaning; and
- recognizing music.

The option may be a visual indication of service selection choices or an audible prompt.

The indication of selection may be a character entered on the subscriber's handset or may be spoken by the subscriber.

### Brief Description of drawings

In the drawings, the same or similar reference numbers identify similar elements or acts.
FIG. 1 illustrates a system for providing Non-prefix based Value Added Services (NPVAS) to a subscriber using the out-of-band approach, in accordance with an embodiment of the present invention;
FIGS. 2A, 2B and 2C illustrate a flow diagram for providing out-of-band NPVAS to a subscriber using a new subscription trigger profile over an INAP interface, in accordance with an embodiment of the present invention;
FIGS. 3A, 3B and 3C illustrate a flow diagram for providing out-of-band NPVAS to the subscriber using an existing subscription trigger profile over the INAP interface, in accordance with an embodiment of the present invention;
FIG. 4 illustrates a subsystem depicting an ISUP loopback implementation of an ISUP interface between the switch and Intelligent System (IS), in accordance with an embodiment of the present invention;
FIGS. 5A, 5B and 5C illustrate a flow diagram for providing the out-of-band NPVAS to the subscriber in the ISUP loopback implementation, in accordance with an embodiment of the invention;
FIG. 6 illustrates a subsystem depicting an ISUP redirect implementation of the ISUP interface between the switch and Intelligent System (IS), in accordance with another embodiment of the present invention;
FIGS. 7A, 7B and 7C illustrate a flow diagram for providing the out-of-band NPVAS to the subscriber in the ISUP redirect implementation, in accordance with another embodiment of the present invention;
FIG. 8 shows a schematic diagram of a mobile handset associated with the subscriber, for displaying a user interactive menu for providing out-of-band NPVAS to the subscriber, in accordance with an embodiment of the present invention;
FIG. 9 shows a screenshot displaying a network-pushed Short Message Service (SMS) in the user interface menu, in accordance with an embodiment of the present invention; and
FIGS. 10A and 10B shows a screenshot displaying a Wireless Application Protocol (WAP) push message in the user interface menu, in accordance with an embodiment of the present invention.

### Detailed Description

In the following description, for purposes of explanation, specific numbers, materials and configurations are set forth in order to provide a thorough understanding of the invention. It will be apparent, however, to one having ordinary skill in the art, that the invention may be practiced without these specific details. In some instances, well-known features may be omitted or simplified, so as not to obscure the present invention. Furthermore, reference in the specification to "one embodiment" or "an embodiment" means that a particular feature, structure or characteristic, described in connection with the embodiment, is included in at least one embodiment of the invention. The appearance of the phrase "in an embodiment", in various places in the specification, does not necessarily refer to the same embodiment. Particular embodiments of the present invention will now be described in greater detail with reference to the figures.

The present invention provides a system, method, user interface, and a computer program product for providing one or more Value Added Services (VAS) to the subscriber without a need for the subscriber to dial any prefix for the VAS. Since the subscriber is able to use the value added service without using a prefix, it is hereinafter referred to as a Non-prefix based Value Added Service (NPVAS). The subscriber makes a call to a recipient directly, using either his phone address book or a phone list (for example, a missed calls list, an incoming calls list, or an outgoing calls list), or a phone pad. The system intercepts the call and holds the voice circuit associated with the call at a switch, without connecting the voice circuits to the system, and meanwhile, the system prompts the subscriber to make an indication of service selection (select a VAS of subscriber's choice) by sending a message on a separate channel, i.e., out-of-band channel. In other words, the system sends an out-of-band message to the subscriber while the subscriber's call is on hold at the switch. The call is on hold at the switch without being connected or answered, hence no CDR will be generated for the duration when the call is on hold. The out-of band message is sent on a separate channel, which can function in parallel with the voice circuit at the subscriber's handset. Hence, the system for providing the NPVAS is hereinafter referred to as an out-of-band NPVAS System (out-of-band NPVASS). The out-of-band message presents a user interactive menu on the subscriber's handset. The subscriber indicates his service selection by sending a postfix selection (P) or selected menu choice in response to the out-of-band message on the separate channel. Depending on the service selection, the out-of-band NPVASS further facilitates initiation of a service application corresponding to the selected value added service. The out-of-band NPVASS facilitates both call-related and non call-related value added services without the requirement of dialing a prefix in either case.

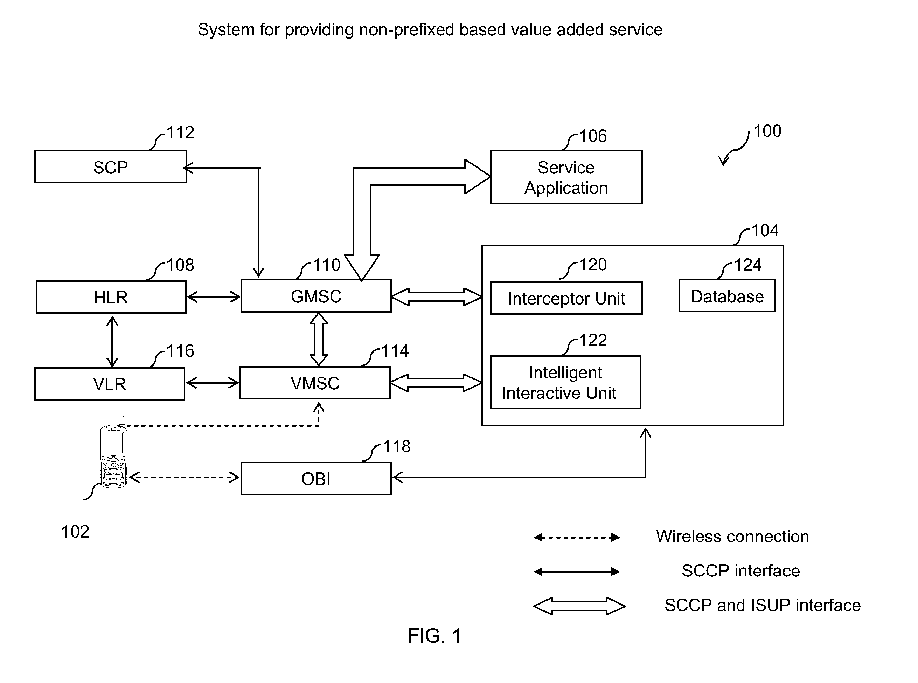

FIG. 1 illustrates a system 100 for providing an out-of-band NPVAS to a subscriber 102, in accordance with an embodiment of the present invention. System 100 includes an Intelligent System (IS) 104 and a Service Application 106, deployed by an operator facilitating the NPVAS. Intelligent System 104 facilitates initiation of Service Application 106 using the out-of-band approach, without requiring subscriber 102 to dial a prefix corresponding to Service Application 106. System 100 further includes a Home Location Register (HLR) 108, a Gateway Mobile Switching Center (GMSC) 110, a Service Control Point (SCP) 112, a Visited Mobile Switching Center (VMSC) 114, a Visited Location Register (VLR) 116, and an out-of-band Infrastructure (OBI) 118. It would be apparent to a person skilled in the art that system 100 may also include various other network elements (not shown in FIG. 1) depending on the architecture under consideration.

Intelligent System 104, HLR 108, GMSC 110, SCP 112 and OBI 118 reside in a Home Public Mobile Network (HPMN) of subscriber 102. VMSC 114 and VLR 116 represent current location of subscriber 102 in VPMN. If subscriber 102 is in the HPMN, VMSC 114 and VLR 116 reside in the HPMN. The operator may also provide the out-of-band NPVAS to roaming subscribers of the HPMN, currently roaming in a Visited Public Mobile Network (VPMN). In such a case, VMSC 114 and VLR 116 reside in the VPMN. GMSC 110 queries HLR 108 for handling voice circuits associated with calls from subscriber 102. GMSC 110, VMSC 114, Service application 106, and IS 104 communicate using either Signal Connection Control part (SCCP) signaling or ISUP interfaces. OBI 118 communicates with IS 104 using SS7 or IP signaling. Moreover, SCP 112, HLR 108, and VLR 116 communicate with GMSC 110 and VMSC 114 using SCCP signaling.

IS 104 further includes an Interceptor Unit (IU) 120, an Intelligent Interactive Unit (IIU) 122, and a Database (DB) 124. In an embodiment of the present invention, IU 120 is an Intelligent Service Control Point (ISCP). In an embodiment of the present invention, IIU 122 is an Out-of Band Interactive System (OBIS). Hereinafter, IIU 122 is interchangeably referred to as OBIS, and IU 120 is referred to as ISCP. IIU and IU communicate with each other over a packet switched connection, such as an Internet Protocol connection. Interceptor unit 120 is coupled to VMSC 114 through an interface such as, but not limited to, an Intelligent Network Application Part (INAP) interface, an Advanced Intelligent Network (AIN) protocol interface, a Wireless Intelligent Network (WIN) protocol interface, a Customized applications for mobile network enhanced logic Application Part (CAP) interface, or an Integrated Service digital network User Part (ISUP) interface.

In an embodiment of the present invention, system 100 defines a new trigger profile associated with the NPVAS, and stores the new subscription trigger profile, hereinafter defined as an NPVAS trigger profile, in HLR 108. The NPVAS trigger profile includes an address of IU 120 in a trigger address list, defined in the NPVAS trigger profile. The NPVAS trigger profile includes one of Originating Customized applications for mobile network enhanced logic Subscription Information (O-CSI) for mobile originated calls, a routing category, a subscription tick, or a Wireless Intelligent Network (WIN) subscription. This subscription trigger profile may depend on operator's configuration or roaming relation between HPMN and VPMN. HLR 108 sends the subscription trigger profile to VLR 116, when the subscriber registers at VLR 116. For example, in Global System for Mobile communications (GSM) implementation, if subscriber 102 is registered at HPMN, an operator specific subscription trigger profile such as Routing Category may be sent by HLR 108 to VLR 116. However, if subscriber 102 is registered with VPMN, a standard O-CSI can be sent by HLR 108 to VLR 116 in VPMN.

In an embodiment of the present invention, SCP 112 hosts one or more existing Intelligent Network (IN) applications deployed by the operator. One or more addresses in a trigger address list, corresponding to the existing subscription triggers, have an address of SCP 112.

In an embodiment of the present invention, intelligent system 104 includes one or more standby Interceptor units (IUs) to provide a failover support when IU 120 fails. The standby Interceptor units implement the same functionality as IU 120. IU 120 and the standby Interceptor units have a single Global Title (GT) and a Signal Point Code (SPC). ISCP provides SS7/SCCP (or IN or CAP or WIN) interface to the operator's switch. The OBIS provides an out-of-band interface like SS7 or IP for the subscriber to enter the postfix, via the operator's OBI 118, with regular prompts within a configurable time interval T. In one embodiment of the present invention, OBI 118 can be VMSC 114 for SMS delivery, or a SGSN for supporting General Packet Radio System (GPRS) / Internet Protocol (IP)/IP Multimedia Subsystem (IMS) infrastructure.

When subscriber 102 makes a call from his mobile handset to a recipient B's called number without any prefix, IU 120 intercepts a call control associated with the call. The call control is the signaling channel used to co-ordinate with VMSC 114, to establish a voice call connection between subscriber 102 and the recipient B. Hereinafter, subscriber 102 may interchangeably be referred to as subscriber A. System 100 holds the voice circuit associated with the call at VMSC 114, for a pre-defined time interval, hereinafter referred to as time interval T. In an exemplary case, system 100 sets interval T at 10 seconds. Meanwhile IIU 122 prompts the subscriber, by sending an out-of-band message to the subscriber on the separate channel while subscriber's call is on hold, to indicate his service selection within T seconds. In one embodiment of the present invention, IIU 122 provides a separate interface (SS7 or IP) for subscriber A to indicate his service selection via OBI 118. The indication of service selection is hereinafter interchangeably referred to as a postfix (P). The prefix is entered post establishment of the call; hence it is called a postfix.

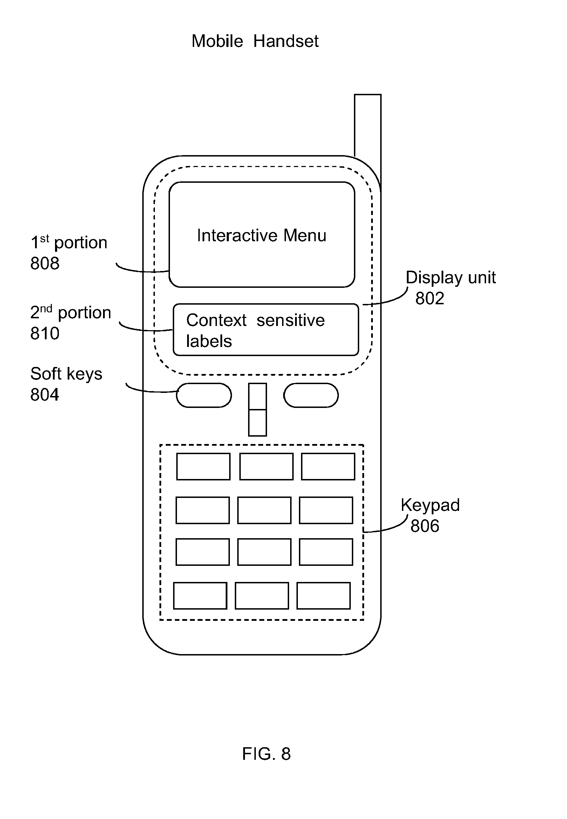

The out-of-band message presents a user interactive menu on the mobile handset associated with subscriber 102. The user interactive menu presents a list of value added services to subscriber 102. Each value added service has a corresponding representative indication of service selection in the user interactive menu. A detailed explanation of the user interactive menu is given in conjunction with FIGS. 8, 9, 10A, and 10B. The indication of service selection may be in the form of a postfix or a menu choice. The postfix may correspond to the VAS the subscriber wishes to obtain. In an embodiment of the present invention, the postfix can be the same as a prefix used by the operator, for providing the value added service using the service application in a prefix-based approach. For example, if the operator uses "*" as the prefix for providing Voice SMS as a VAS, then system 100 may also implement the Voice SMS service with the postfix "*". Another example of the postfix is the carrier selection code for a long distance call made by subscriber 102 in some countries, such as Brazil, which require local subscribers to select a carrier code for every long distance call. The following example illustrates a user interactive menu for selecting the carrier code:
"Please enter your carrier selection from the following options:
   One for TIM-Brazil
   Two for ViVo-Brazil
   Three for Brazil Telecom"

In one embodiment of the present invention, system 100 may specify a default operator if subscriber 102 does not enter a valid carrier selection within the time interval T. In another embodiment of the present invention, system 100 may not specify a default operator due to regulatory restrictions. In this case, system 100 prompts subscriber 106 to select a carrier, and the user interactive menu includes a carrier selection message, such as "Please enter your carrier selection code", without presenting a menu to subscriber 102.

In addition, the user interactive menu may also include an indication corresponding to an end key, if the subscriber does not wish to choose any value added service, but wishes to continue a normal call to the recipient. The subscriber may enter a postfix corresponding to the end key, such as "#", to continue the call as a normal call. The subscriber may also end the service selection by using the end key. System 100 may configure the user interactive menu based on the subscriber's preferences or the operator's preferences or any combination thereof. For example, if the subscriber marks one or more services as desired services, the user interactive menu may include only the desired services. The out-of-band message is one of, but not limited to, a Short Message Service (SMS), an Unstructured Supplementary Service Data (USSD), an Instant Message (IM), a Push to Talk (PTT) message, a Wireless Application Part (WAP) message, a Hypertext Transfer Protocol (HTTP) push message, and a Uniform Resource Locator (URL). The subscriber makes a service selection by replying to the received out-of-band message. Hence, a reply to an out-of-band SMS is an SMS with the indication of service selection. Similarly, a USSD message is replied to with a USSD response with the indication of service selection.

After receiving the indication of service selection from the subscriber, IIU 122 sends the indication of service selection to IU 120. DB 124 stores a mapping between one or more indications of service selection (i.e. the postfix P) and one or more corresponding service applications (i.e. VAS). In addition, DB 124 stores one or more prefixes corresponding to one or more service applications. In one embodiment of the present invention, DB 124 is coupled to IU 120 using a packet switched connection. IU may determine a service application, corresponding to the indication of service selection, using the mapping stored in DB 124. The mapping is stored in the form of a mapping table in DB 124. Depending on the determined service application, IU 120 prefixes a corresponding prefix (P') to the called number of the recipient B. It will be apparent to a person skilled in the art that P and P' may or may not be identical, depending upon the operator's configuration. Table 1 depicts an exemplary mapping between the indications of service selection (P), corresponding prefixes (P'), and corresponding options for service applications.

**Table 1**

| Indication of Service Selection (P) | Prefix (P') | Service option |
|---|---|---|
| 1 | * | Voice SMS Deposit |
| 2 | ** | Voice SMS retrieval |
| 3 | 17909 | VoIP Call |
| 4 | 96688 | Rich Talk (Talking enriched with sound or multimedia effects) |
| 5 | 12345 | Video messaging |
| 6 | 9876 | USSD call back |
| 7 | 7777 | Voice analysis service |
| 8 | 555 | Music/song recognition |
| 9 | 667 | Voice recognition |
| 10 | 778 | Lie detection |
| 11 | 885 | Emotion recognition |
| 12 | 862 | Media addition |

It will be apparent to a person skilled in the art that Table 1 is a non-exhaustive representative list of the mapping. System 100 can utilize existing prefix based service applications by prefixing the recipient's number with a prefix corresponding to the existing prefix based service application. If system 100 chooses to employ the same postfix as the prefix of Service Application 106, such as "*" for Voice SMS deposit, system 100 can simply prefix the recipient's number with "*". Alternatively, if the postfix and the prefix of Service Application 106 are different, system 100 translates the postfix to the prefix for Service Application 106, using the mapping shown in table 1. For example, if subscriber A selects '2' as indication of service selection for selecting the Voice SMS retrieval, system 100 translates the indication of service selection from "2" to "**" and prefixes "**" to the called number of recipient B.

In one embodiment of the present invention, IU 120 adds the prefix to B's called number. Thereafter, IU 120 directs VMSC 114 to route the call to the corresponding Service Application 106. In one case, subscriber 102 may enter an invalid postfix as the indication of service selection, hence IIU 122 re-prompts subscriber A to make a new indication of service selection, for a pre-defined number of times. In other words, IIU 122 re-prompts the subscriber to make a valid indication for a fixed number of attempts. In an exemplary case, IIU 122 allows the subscriber to make the new indication of service selection for three attempts. In another embodiment of the present invention, when the subscriber makes the invalid indication of service selection in the first attempt, IU 120 disconnects the call control from IIU 122 without allowing the subscriber to make a new indication of service selection. Thereafter, IU 120 directs VMSC 114 to route the call to the recipient's number (i.e. IU 120 treats the call as a normal call). In another embodiment of the present invention, IU 120 treats the call as a normal call or with a default value, when the subscriber does not make the indication of service selection in the interval T. In yet another embodiment of the present invention, IU 120 treats the call as a normal call, when the subscriber makes the indication corresponding to the end key (#) in the user interactive menu.

In another embodiment of the present invention, the subscriber may directly dial the prefix (P'), which explicitly indicates the service selection. In such a case, VMSC 114 intelligently avoids passing the call control to the IU 120, by using trigger criteria or routing configurations. Alternatively, IU 120 may apply logic to handle the prefixed call from the subscriber. In accordance with an embodiment of the present invention, IU 120 may apply one or more filtering criteria on the call, before processing the call further. The one or more filter criteria include, but are not limited to, subscriber's roaming condition, the recipient's number, the subscriber's number, a blacklist, a white list, time, and historical events. When the filtering criterion is met, IU 120 routes the call back to VMSC 114. In another embodiment of the present invention, VMSC 114 applies the filter criteria before routing the call to IU 120. Furthermore, if the subscriber directly dials a valid prefixed called number, indicating a valid service selection, IU 120 routes the call back to VMSC 114, and VMSC 114 routes the call further according to the operator's existing configuration.

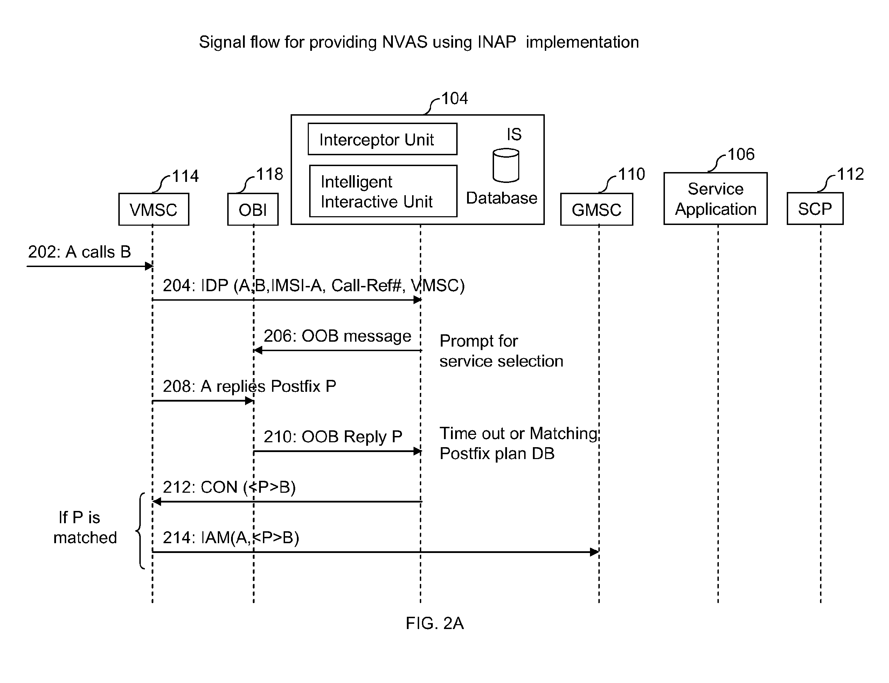

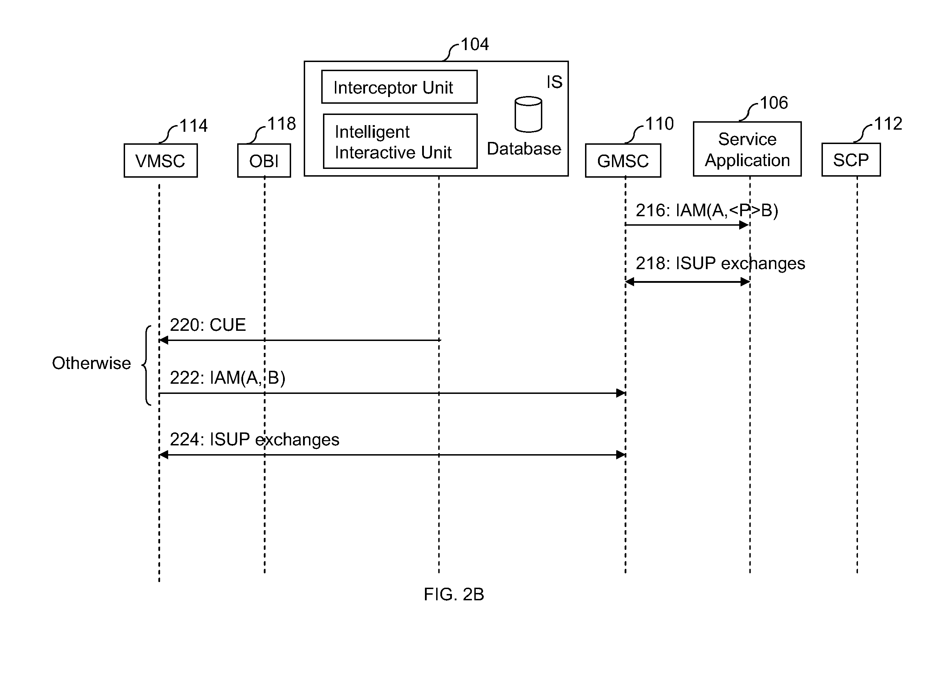

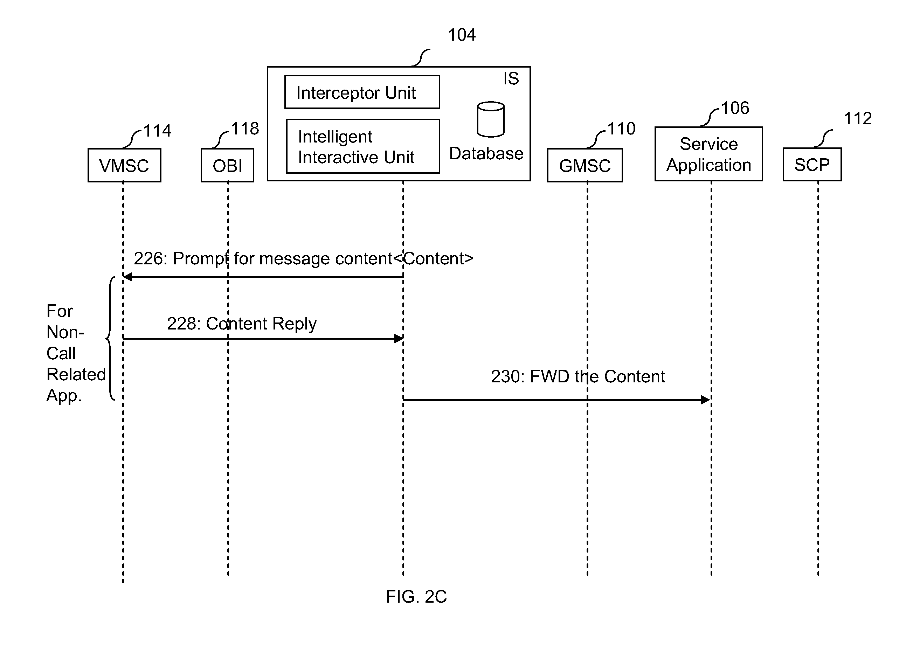

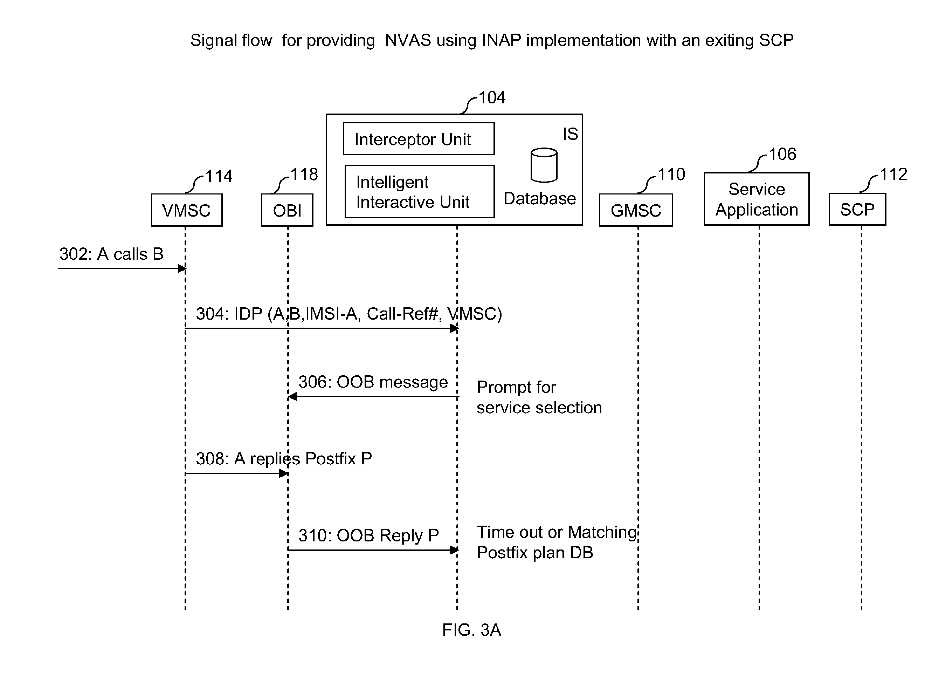

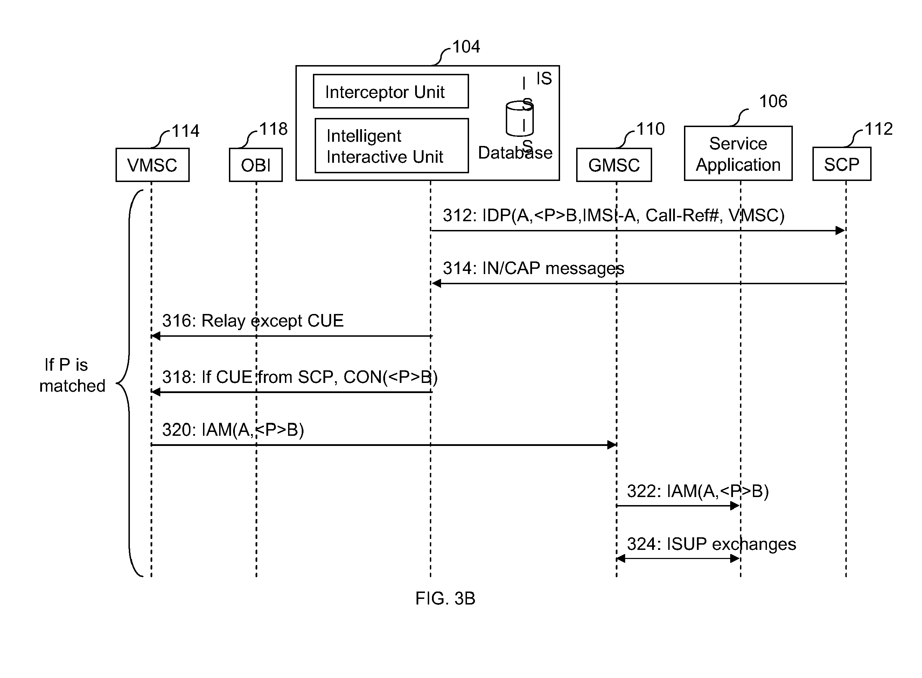

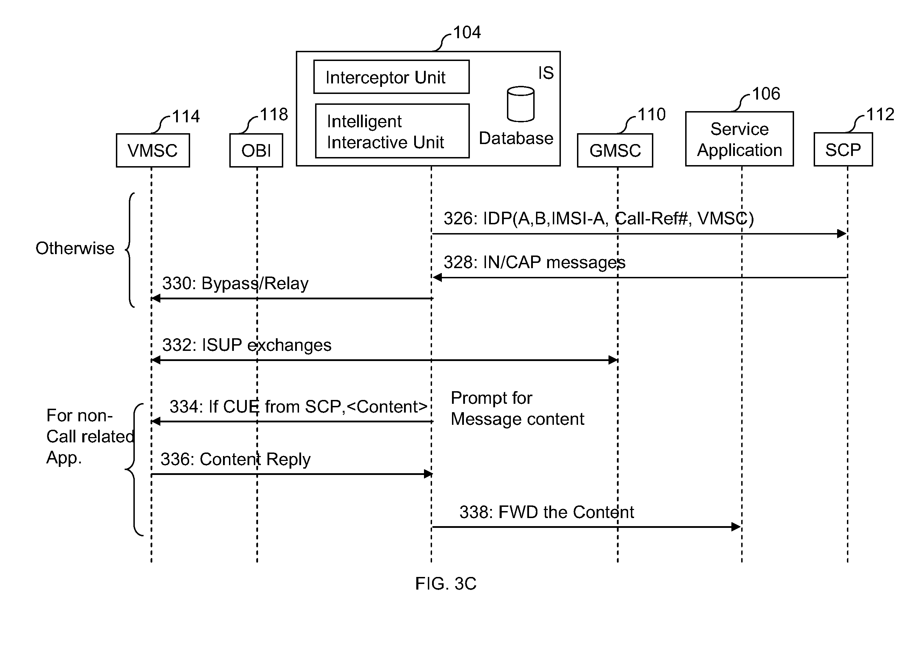

In an embodiment of the present invention, IU 120 is coupled to VMSC 114 through an INAP interface. FIGS. 2A, 2B, 2C, and 3 illustrate various embodiments when IU 120 and VMSC 114 communicate over the INAP interface. FIGS. 2A, 2B and 2C illustrate a flow diagram for providing the NPVAS to subscriber A using the NPVAS trigger profile over an INAP interface, in accordance with another embodiment of the invention. Subscriber A has already subscribed to the NPVAS, and now makes a call to a recipient B using either the phone address book, or the phone number list, or the phone pad without dialing the prefix. At step 202, the call reaches VMSC 114. VMSC 114 uses subscriber A's NPVAS trigger profile at VLR 116 to pass the call control to IU 120. At step 204, VMSC 114 passes the call control to IU 120 by using a message such as an INAP Initial Detection Point (IDP) message. VMSC 114 sends various parameters related to the call in the IDP message, such as the calling subscriber's number A#, International Mobile Subscriber Identifier (IMSI) of subscriber A, call reference number, and other information. IU 120 determines whether the NPVAS is applicable to the recipient number B, using some application logics. For example, the NPVAS may be inapplicable to the recipient number B if the recipient number B is already prefixed with a prefix, such as "*", "<short code>, or "#", present in the mapping maintained in DB 124, as described later in another embodiment of the invention. In another example, the NPVAS is also not applicable to the recipient number B if it is shorter than a pre-defined length, or if it belongs to a blacklist. IU 120 may also apply any combination of the above-mentioned application logics. However, if IU 120 determines the NPVAS is applicable to the recipient number B, IIU 122, at step 206, sends an out-of-band (OOB) message to subscriber A's handset on a separate channel. The OOB message is sent via OBI 118 to prompt subscriber A to indicate the selected service. It would be apparent to a person skilled in the art, that IIU 122 communicates with subscriber A via the OBI 118, and for the sake of clarity, the following call flow description omits the same. IIU 122 presents a user interactive menu in the OOB message and prompts subscriber A to respond to the OOB message within pre-defined time interval T. In other words, subscriber A's call is still active and on hold at VMSC 114, while he gets the OOB message on his handset.

Thereafter, the subscriber indicates the selected service, hereinafter referred to as postfix P in the reply to the OOB message. Thereafter, at step 208, VMSC 114 relays P to OBI 118. Thereafter, at step 210, OBI 118 relays the out-of-band message containing P from subscriber A to IIU 122. Furthermore, IIU 122 sends the indication of service selection (P) to IU 120. Thereafter, IU 120 checks whether P is a valid indication of service selection using the mapping table stored in DB 124. If IU 120 determines that P is valid, then it selects a service application corresponding to P using the mapping table in DB 124. Depending on the service application, IU 120 prefixes a called number of recipient B with P'. When P is the same as a prefix corresponding to the prefix-based service application, P' is same as P. If P is different from the prefix, then IU 120 translates P to P' using the mapping table. In an exemplary case, when P is the menu choice "1", P' equals "*", as illustrated in Table 1. In addition, if subscriber A does not indicate his service selection in time interval T, P' is empty, as described later in another embodiment of the invention.

Furthermore, at step 212, IU 120 directs VMSC 114 to route the call to the prefixed called number (<P'>B), for initiating the service application by issuing an INAP CONNECT (CON) message to VMSC 114. At step 214, VMSC 114 sends a call set-up request to GMSC 110 by issuing IAM (A, <P'>B). The INAP CON message establishes the voice circuit between VMSC 114 and GMSC 110. Thereafter, at step 216, GMSC 110 connects the call with Service Application 106, by relaying the ISUP IAM (A, <P'>B) message to service application 106. In other words, GMSC 110 sets up the voice circuits with Service Application 106. Finally, at step 218, service application 106 and GMSC 110 exchange various ISUP messages to provide the value added service to subscriber A. The service application can be a call related or a non-call related service application. A person skilled in the art will recognize that the ISUP messages exchanged at step 218 include an ISUP Answer Message (ANM), to indicate establishment of the call, and GMSC 110 starts generating a Call Detail Record (CDR) associated with the call to bill subscriber A.

In another embodiment of the present invention, at step 210, IU 120 may determine P as an invalid postfix, either when the subscriber fails to enter the indication of service selection within predefined time interval T, or if the subscriber makes the indication corresponding to the end key. Thereafter, at step 220, IU 120 routes the call control back to VMSC 114, by issuing an INAP CONTINUE(A, <P'>B) message, with an empty P', to VMSC 114. The call control is disconnected from IU 120. At step 222, VMSC 114 sends a call set-up request to GMSC 110 using IAM (A, <P'>B). Hence, VMSC 114 establishes voice circuits with GMSC 110. Finally, at step 224, VMSC 114 performs necessary ISUP exchanges with GMSC 110, to proceed with a normal voice call from A to B. Again, the call is answered using ISUP ANM message and GMSC 110 starts generating the CDR to bill subscriber A.

In another embodiment of the present invention, when the service application is a non-call related service application, steps 202 to 210 remain the same. After getting a valid postfix P, IU 120 may direct VMSC 114 to disconnect the call, and hence disconnect the call control signaling link with IU 120. Non-call related applications require message content from the subscriber, corresponding to the service application selected by him. For example, subscriber A may select color SMS service as the non-call related service application. Thereafter, at step 226, IIU 122 sends a message to subscriber A, to reply with the message content corresponding to the non-call related service application. Thereafter, at step 228, subscriber A replies the message with the message content in the reply to the message received at step 226. Finally, at step 230, IIU 122 forwards the message content, received from subscriber A, to Service Application 106. Service Application 106 thereafter continues the call flow as per the standard under consideration. In another embodiment of the invention, subscriber A may dial a prefix that explicitly indicates his service selection, then steps 206 to 210 are not followed, and steps 212 to 218 and step 224 complete the call flow.

In accordance with various embodiment of the invention, it would be apparent to a person skilled in the art, that all messages exchanged between various system components are purely for explanation purposes, and hence other types of messages conforming to the protocol under consideration may also be used.

Instead of defining the new NPVAS trigger profile, the operator may use an existing subscription trigger profile of the subscriber, stored in HLR 108, for providing the NPVAS, in accordance with an embodiment of the present invention. In this case, IU 120 relays SCCP messages between VMSC 114 and SCP 112, defined in the existing subscription trigger profile. In an embodiment of the present invention, system 100 replaces an address of SCP 112 in a trigger address list with the address of IU 120, for intercepting the call control associated with the call. The subscriber must register for the NPVAS for the trigger address list to be modified. In another embodiment of the present invention, system 100 does not modify the trigger address list. Instead, system 100 configures one of VMSC 114, GMSC 110, and a Signal Transfer Point (STP), to redirect SCCP messages originating from VMSC 114 to IU 120 using either Global Title (GT) or Message Transfer Part (MTP) routing.

FIGS. 3A, 3B and 3C illustrate a flow diagram for providing out-of-band NPVAS to subscriber A using the existing subscription trigger profile over an INAP interface, in accordance with an embodiment of the present invention. Subscriber A has already subscribed to the NPVAS and now makes a call to a recipient B, using either the phone address book, or the phone number list, or the phone pad, without dialing the prefix. At step 302, the call reaches VMSC 114. VMSC 114 uses subscriber's existing trigger profile stored at VLR 116 to pass the call control to IU 120. At step 304, VMSC 114 passes the call control to IU 120 by using a message, such as an INAP Initial Detection Point (IDP) message. VMSC 114 sends various parameters related to the call in the IDP message, such as the calling subscriber's number A#, International Mobile Subscriber Identifier (IMSI) of subscriber A, call reference number, and other information. As described earlier, IU 120 determines whether the NPVAS is applicable to recipient number B, using some application logics. If IU 120 determines that the NPVAS is applicable, IIU 122, at step 306, sends the OOB message to subscriber A's handset on a separate channel via OBI 118, to prompt subscriber A to indicate his service selection. IIU 122 presents a user interactive menu in the OOB message and prompts subscriber A to respond to the OOB message within pre-defined time interval T. The OOB message is sent on a separate channel, and this separate channel is established in parallel with the voice circuit of the call. In other words, subscriber A's call is still active and on hold at VMSC 114, while he gets the OOB message on his handset.

Thereafter, the subscriber sends his indication of service selection, as postfix P, in his reply to the OOB message. Thereafter, at step 308, VMSC 114 relays P to OBI 118. Furthermore, at step 310, OBI 118 relays the out-of-band message containing P from subscriber A to IIU 122. Thereafter, IIU 122 sends the indication of service selection (P) to IU 120. Thereafter, IU 120 checks whether P is a valid indication of service selection, using the mapping stored in DB 124. If IU 120 determines that P is valid, then it selects a service application corresponding to P, using the mapping table store in DB 124. Depending on the service application, IU 120 prefixes a called number of the recipient B with P'. When P is the same as a prefix corresponding to the prefix-based service application, P' is the same as P. If P is different from the prefix, IU 120 translates P to P', using the mapping table. In an exemplary case, when P is the menu choice "1", P' equals "*", as illustrated in Table 1. In addition, when subscriber A does not indicate his service selection in interval T, P' is empty, as described later in another embodiment of the invention.

Thereafter, at step 312, IU 120 relays the INAP IDP message to SCP 112, after replacing the called number B with a prefixed called number <P'>B. In addition, IU 120 changes a calling address in the IDP message to the address of IU 120. Since the calling address in the IDP message is changed to the address of IU 120, SCP 112, at step 314, sends IN messages to IU 120. Thereafter, at step 316, IU 120 relays the IN messages to VMSC 114 with an exception of an INAP Continue (CUE) message. Furthermore, IU 120, at step 318, directs VMSC 114 to route the call to the prefixed called number (<P'>B) for initiating the service application by issuing an INAP CONNECT (CON) message to VMSC 114, upon receiving the Continue request from SCP 112, at step 314. At step 320, VMSC 114 sends a call set-up request to GMSC 110 by issuing IAM (A, <P'>B). The INAP CON message establishes the voice circuit between VMSC 114 and GMSC 110. Thereafter, at step 322, GMSC 110 connects the call with service application 106, by relaying the ISUP IAM (A, <P'>B) message to Service Application 106. In other words, GMSC 110 sets up the voice circuits with service application 106. Finally, at steps 324, Service Application 106 and GMSC 110 exchange various ISUP messages to provide the value added service to the subscriber A. The service application can be a call related or a non-call related service application.

In another embodiment of the present invention, at step 310, IU 120 may determine P as an invalid postfix, either when the subscriber fails to enter the indication of service selection within predefined time interval T, or if the subscriber makes the indication corresponding to the end key (#). Thereafter, IU 120 may change a calling address in the IDP message to the address of IU 120. This is done so that future IN messages exchanged by SCP 112 and VMSC 114 through IU 120, at step 328 and 330, in accordance with an embodiment of the invention. Alternatively, IU 120 may not replace the calling address in the IDP message, so that future IN messages exchanged by SCP 112 and VMSC 114 bypasses IU 120, at step 330. Finally, at step 332, VMSC 114 performs necessary ISUP exchanges with GMSC 110 to proceed with a normal voice call from A to B.

In another embodiment of the present invention, when the service application is non-call related service application, steps 302 to 310 remain same. After getting a valid postfix P, IU 120 may direct VMSC 114 to disconnect the call control signaling link with itself. Non-call related service applications require message content from the subscriber. For example, the subscriber may select color SMS service as the non-call related service application. Thereafter, at step 334, IIU 122 sends a message to subscriber A to reply, for the message content corresponding to the non-call related service application. Thereafter, at step 336, subscriber A replies with the message content. Finally, at step 338, IIU 122 forwards the message content received from subscriber A to service application 106. In another embodiment of the invention, subscriber A may dial a prefix that explicitly indicates his service selection, then steps 306 to 310 are not followed, and steps 312 to 324 and step 332 complete the call flow.

A person skilled in the art will recognize that for various embodiments corresponding to the CAP interface and the WIN interface between VMSC 114 and IU 120, system 100 follows similar call flows, with various INAP messages replaced by corresponding CAP messages and WIN messages, respectively.

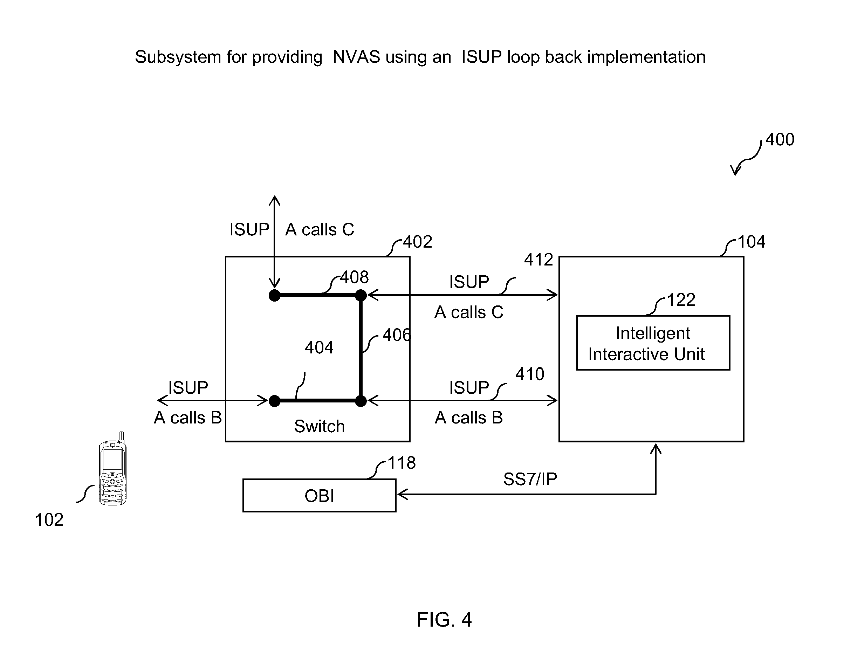

The operator may not be able to support IN protocol either due to IN license or cost considerations of IN infrastructure. In such a case, the operator may implement an ISUP interface between operator's switch infrastructure and IS 104, thereby allowing the operator to provide NPVAS without incurring unnecessary overhead. FIG. 4 illustrates a subsystem 400 depicting an ISUP loop-back implementation of the ISUP interface between the switch and an Intelligent System (IS), in accordance with an embodiment of the present invention. Subsystem 400 includes voice trunks 404, 406 and 408 forming a hard coded loop back circuit of the voice circuits at switch 402. Switch 402 is either VMSC 114, or GMSC 110. Further, subsystem 400 includes signaling links 410 and 412 for coupling switch 402 and IS 104. Switch 402 is configured to route all the calls originating from subscriber 102 over the hard coded loop back circuits at switch 402. In one embodiment of the present invention, IS 104 functions as a virtual service node. When switch 402 receives a call connection request, from subscriber A's number to the recipient's number B, switch 402 routes a call connection request and ISUP A calls B, over signaling link 410 to IS 104. IS 104 performs the call-processing necessary for providing the out-of-band NPVAS, and returns a call control instruction. ISUP A calls C, to looped back voice trunk 408 via signaling link 412, for an outgoing leg of the call. Switch 402 then routes the call to the outgoing leg.

In another embodiment of the present invention, when the service application is a non-call related service application, the out-of-band NPVASS is able to provide the NPVAS to the subscriber using the ISUP loop-back interface. The operator must statically allocate a set of loop-back circuits at the switch, and must configure the switch to route all mobile originated calls by the subscriber over the set of loop-back voice circuits with SCCP messages, corresponding to the mobile originated calls to IIU. In one embodiment of the present invention, switch 402 is VMSC 114.

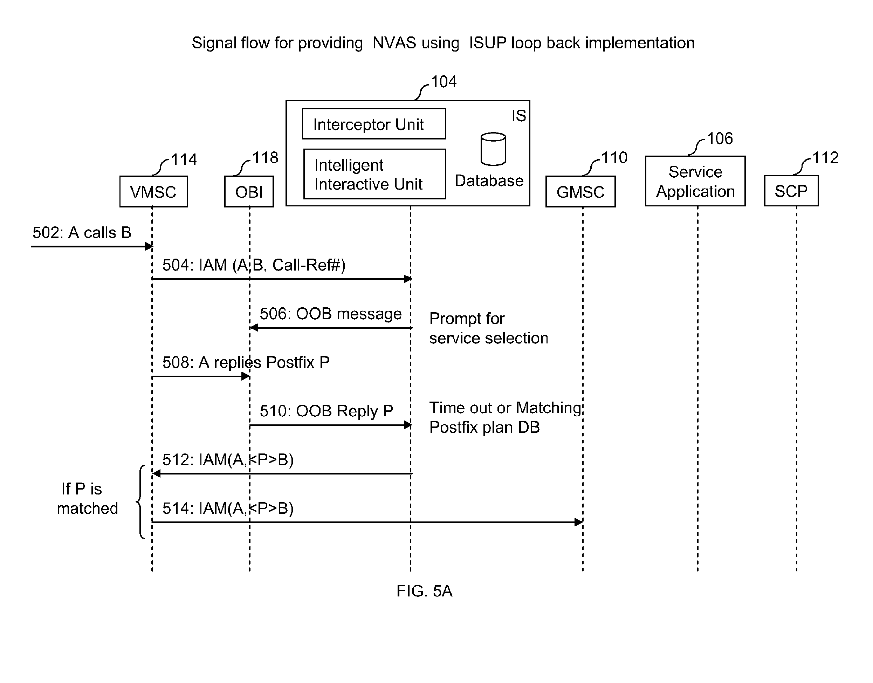

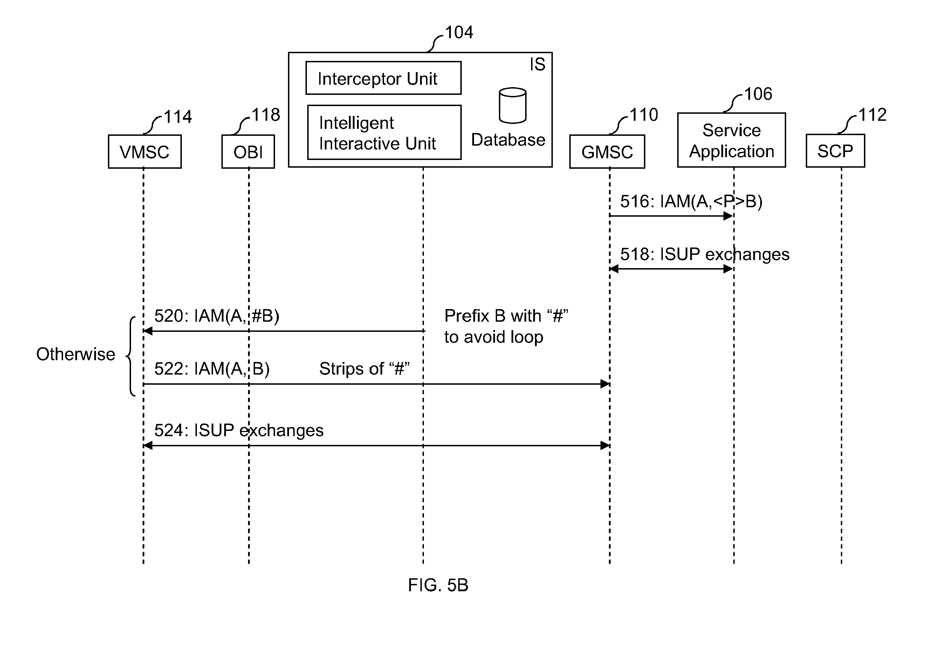

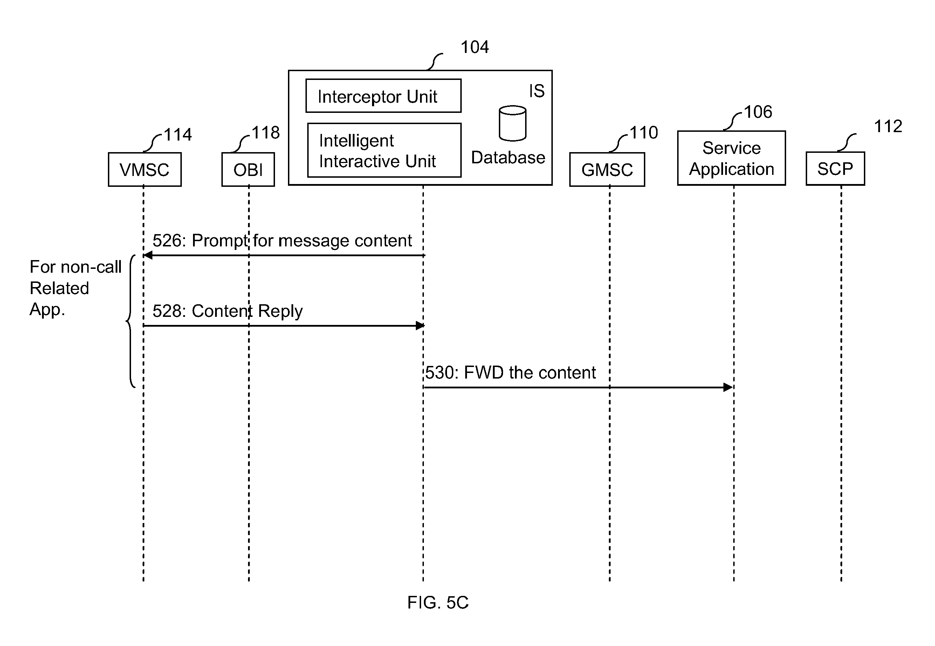

FIGS. 5A, 5B and 5C illustrate a flow diagram for providing the out-of-band NPVAS to a subscriber over the ISUP interface using the ISUP loop-back implementation, in accordance with an embodiment of the present invention. Subscriber A, having subscribed to the NPVAS, makes a call to a recipient B using either the phone address book, the phone number list, or the phone pad, without dialing the prefix. At step 502, the call reaches VMSC 114. Thereafter, at the step 504, VMSC 114 passes the call control to IU 120 using a message such as an ISUP IAM (A, B, call-Ref#) message, over signaling link 410. IU 120 determines whether the NPVAS is applicable to the recipient's number B using application logic as explained in conjunction with FIG. 2. If IU 120 determines that the NPVAS is applicable to the recipient's number B, IIU 122, at step 506, sends the OOB message to subscriber A on a separate channel via OBI 120, to prompt subscriber A to indicate his service selection (i.e. VAS) within the time interval T. The IIU facilitates this by presenting a user interactive menu in the OOB message sent to the subscriber. The separate channel is established in parallel with the voice circuit.

Thereafter, the subscriber sends his indication of service selection as postfix P in his reply to the OOB message. Thereafter, at step 508, VMSC 114 relays P to OBI 118. Further, at step 510, OBI 118 relays the OOB message, containing P, to IIU 122. Thereafter, IIU 122 sends P to IU 120. Thereafter, IU 120 checks whether P is a valid indication of service selection, using the mapping table stored in DB 124. When IU 120 determines that P is valid, IU 120 selects a service application corresponding to the indication of service selection, using the mapping table stored in DB 124. Depending on the identified service application, IU 120 prefixes the called number of recipient B with P'. When P is same as a prefix corresponding to the prefix-based service application, P' is the same as P. If P is different from the prefix, IU 120 translates P to P' using the mapping table. In addition, if subscriber A does not indicate his service selection in interval T, P' remains empty.

Thereafter, at step 512, IU 120 passes the call control associated with the call to the loop back circuits to VMSC 114, using IAM (A, <P'>B). At step 514, VMSC 114 sends a call set-up request to GMSC 110, by issuing IAM (A, <P'>B). Thereafter, at step 516, GMSC 110 establishes voice circuits service application 106. Finally, at step 518, Service Application 106 and GMSC 110 exchange various ISUP messages, to provide the NPVAS to subscriber A. The service application can be a call related or a non-call related service application.

In another embodiment of the preset invention, at step 510, IU 120 may determine P as an invalid postfix, or the subscriber may fail to enter postfix P within the time interval T, or the subscriber may press the end key. In such a case, IU 120 adds prefix # to the recipient's number B. Since the call is now an ordinary one, there is no requirement for using loop-back voice circuits at the switch. Hence, the prefix # is added to the recipient's number B. Thereafter, at step 520, IU 120 sends the prefix called subscriber's number #B to VMSC 114 using IAM (A, #B). The call control is then disconnected from IU 120. After striping off # from the recipient's number B, at step 522, VMSC 114 sends a call set-up request to GMSC 110, using IAM (A, B). This proceeds like an ordinary call from A to B. Finally, at step 524, GMSC 110 performs ISUP exchanges with VMSC 114 to facilitate the call.

In another embodiment of the present invention, when the service application is non-call related, steps 502 to 510 remain the same. After getting a valid postfix P, IU 120 may direct VMSC 114 to disconnect the call and hence disconnect the call control signaling link with IU 120. Non-call related applications require message content from the subscriber. Thereafter, at step 526, IIU 122 sends a message to subscriber A to reply with the message content, corresponding to the non-call related service application. Thereafter, at step 528, subscriber A replies with the message content. Finally, at step 530, IIU 122 forwards the message content received from subscriber A to service application 106. In another embodiment of the invention, subscriber A may dial a prefix that explicitly indicates his service selection. In such a case, steps 506 to 510 are not followed, and steps 512 to 518 and step 524 complete the call flow.

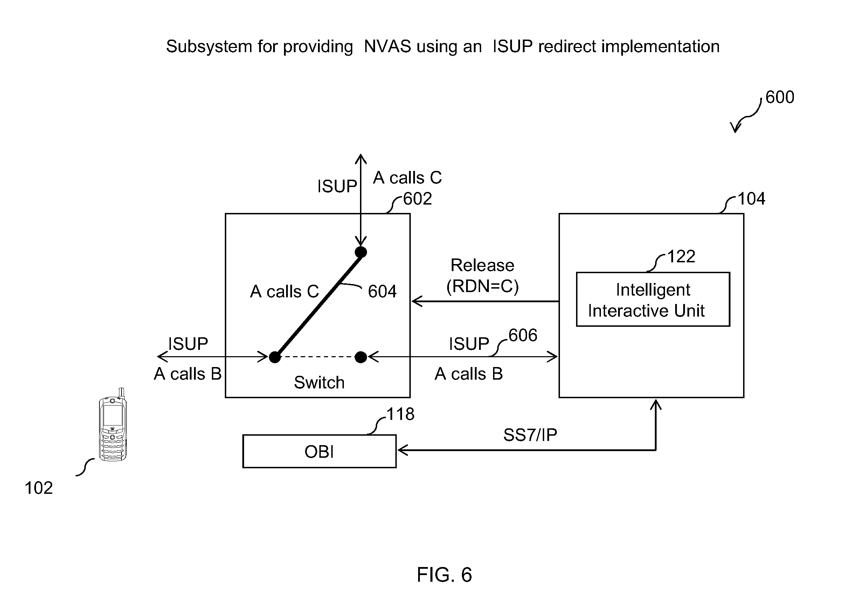

As described earlier, the ISUP loop-back implementation doubles the number of ports needed in the switch for processing the call. Furthermore, the operator must pre-allocate a set of loop-back circuits for providing the out-of-band NPVAS. To overcome these problems, the operator may choose to use ISUP redirect implementation between the switch infrastructure and IS 104. FIG. 6 illustrates a subsystem 600 implementing the ISUP interface between switch 602 and IS 104, using ISUP redirect implementation, in accordance with an embodiment of the present invention. Subsystem 600 is able to provide the out-of-band NPVAS to the subscriber using the ISUP interface. Subsystem 600 includes switch 602 and IS 104. The switch may be either VMSC 114 or GMSC 110. Switch 602 is capable of being redirecting to a redirection number using a link 604. Switch 602 uses either Release Link Trunking (RLT) technique, or Release-To-Pivot (RTP) technique for redirecting the current switch port. Subsystem 600 further includes a singling link 606 for coupling switch 602 and IS 104. As mentioned before, IS 104 functions as a virtual service node. When switch 602 receives a call connection request, from the subscriber's number A to the recipient's number B, switch 602 routes a call connection request and ISUP A calls B, over signaling link 606 to IS 104. IS 104 performs call processing for providing the out-of-band NPVAS, and returns a Redirection Number (RDN) to switch 602, ISUP Release (RDN = C), over signaling link 606 for an outgoing leg of the call. This indicates that the call from A to B is now redirected to C. Switch 602 then routes the call to the outgoing leg, by redirecting voice trunk 604 at the current switch port.

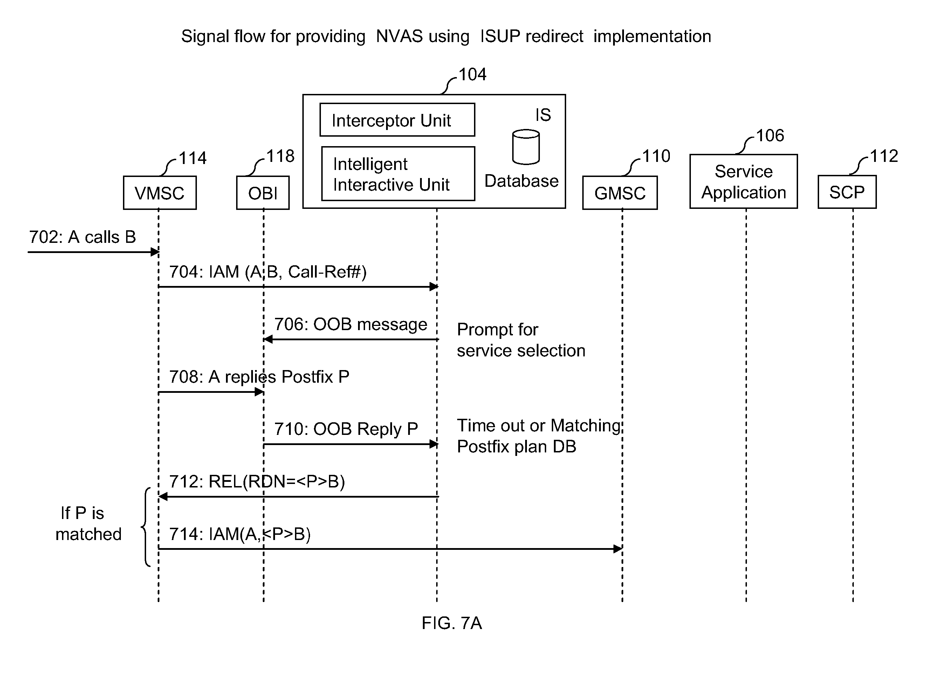

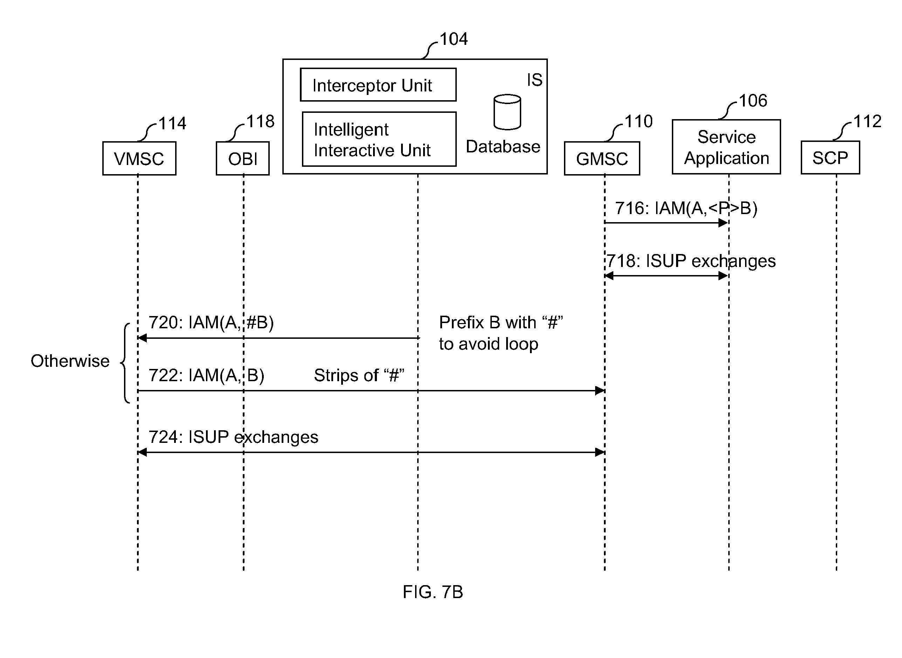

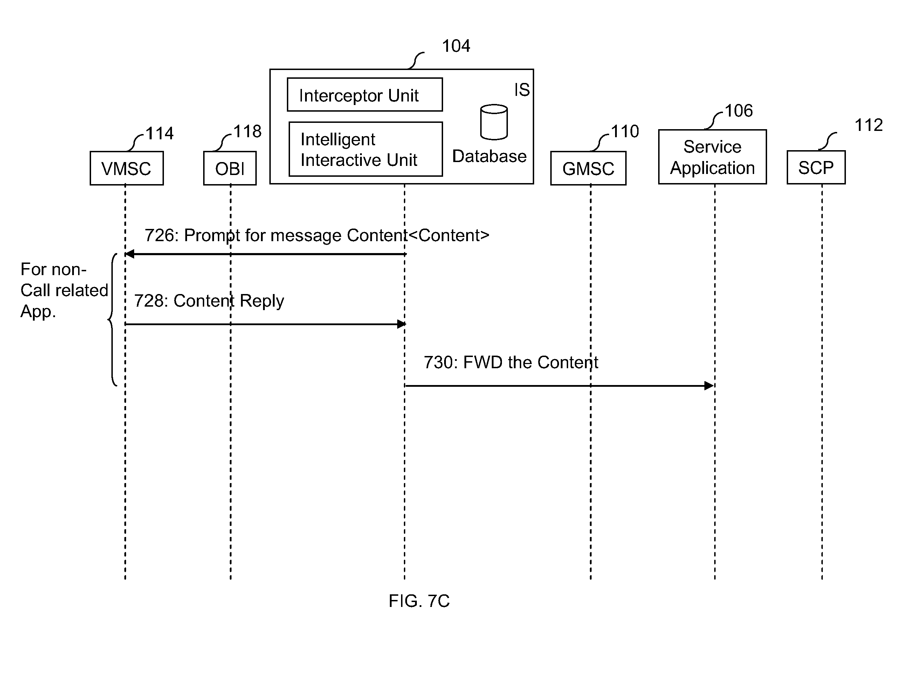

The out-of-band NPVASS is able to provide the NPVAS to the subscriber using the ISUP redirect interface as well. The operator must configure each VMSC 114 to route SCCP messages corresponding to all mobile originated calls by the subscriber to IU 120. In another embodiment of the present invention, switch 602 is VMSC 114. FIGS. 7A, 7B and 7C illustrate a flow diagram for providing the out-of-band NPVAS to a subscriber over the ISUP interface, using the ISUP redirect implementation, in accordance with an embodiment of the invention. Subscriber A, having subscribed to the NPVAS makes a call to a recipient B, using either his phone address book, or phone number list, or phone pad, without dialing any prefix. At step 702, the call reaches VMSC 114. Thereafter, at step 704, VMSC 114 passes the call control to IU 120, using a message such as an ISUP IAM (A, B, call-Ref#) message, over signaling link 606. IU 120 checks whether the NPVAS is applicable to the recipient's number B, using some application logics. IU 120 may also apply any combination of the application logics to determine the same. If the NPVAS is applicable, IIU 122, at step 706, sends the OOB message to subscriber A on a separate channel via OBI 118 to prompt subscriber A to indicate his service selection (i.e. VAS) within the time interval T. The IIU facilitates this by presenting a user interactive menu in the OOB message sent to the subscriber. A separate channel is established in parallel with the voice circuit. Thereafter, the subscriber sends his indication of service selection, i.e. the postfix P in the reply to the OOB message. Thereafter, at step 708, VMSC 114 relays P to OBI 118. Further, at step 710, OBI 118 relays the OOB message containing P to IIU 122. Thereafter, IIU 122 sends the indication of service selection to IU 120. Thereafter, IU 120 checks whether P is a valid indication of service selection, using the mapping table stored in DB 124. When IU 120 determines that P is valid, in an embodiment of the present invention, IU 120 selects a service application corresponding to the indication of service selection, using the mapping table stored in DB 124. Depending on the identified service application, IU 120 prefixes the called number of the recipient B with P'. When P is the same as a prefix corresponding to the prefix-based service application, P' is the same as P. If P is different from the prefix of the service application, IU 120 translates P to P', using the mapping table. In addition, when subscriber A does not make his indication of service selection in interval T, P' remains empty.

Thereafter, at the step 712, IU 120 redirects VMSC 114 to the new redirection number (RDN), by using a message such as an ISUP release message (REL). The new redirection number is the prefixed called subscriber's number <P>B#. At step 714, VMSC 114 sends a call set-up request to GMSC 110 by issuing IAM (A, <P'>B). Thereafter, at step 716, GMSC 110 establishes voice circuits with service application 106. Finally, at step 718, service application 106 and GMSC 110 exchange various ISUP messages to provide NPVAS to subscriber A. The service application can be a call related or a non-call related service application.

In another embodiment of the preset invention, at step 710, IU 120 may determine P to be an invalid postfix, or the subscriber may fail to enter postfix P within the time interval T, or the subscriber may press the end key. In such a case, IU 120 adds prefix # to the recipient's number B. Since the call is now an ordinary one, there is no requirement for redirecting the current switch port. Hence, the prefix # is added to the recipient's number B. Thereafter, at step 720, IU 120 sends the prefix recipient's number #B to VMSC 114 using IAM (A, #B). The call control is then disconnected from IU 120. After striping off # from the recipient's number B, at step 722, VMSC 114 sends a call set-up request to GMSC 110, using IAM (A, B). This proceeds like an ordinary call from A to B. Finally, at step 724, GMSC 110 performs ISUP exchanges with VMSC 114 to facilitate the call.

In another embodiment of the present invention, when the service application is non-call related, steps 702 to 710 remain the same. After getting a valid postfix P, IU 120 may direct VMSC 114 to disconnect the call, and hence disconnect the call control signaling link with IU 120. As explained earlier, non-call related applications require message content from the subscriber. Hence, at step 726, IIU 122 sends a message to subscriber A to reply with the message content corresponding to the non-call related service application. Thereafter, at step 728, subscriber A replies with the message content. Finally, at step 730, IIU 122 forwards the message content received from subscriber A to service application 106. In another embodiment of the invention, subscriber A may dial a prefix that explicitly indicates his service selection. In such a case, steps 706 to 710 are not followed and steps 712 to 718 and step 724 complete the call flow.

As mentioned earlier, the out-of-band NPVASS facilitates both call-related and non call-related value added services. Call-related value added services include, but are not limited to, voice Short Message Service (SMS), video SMS, rich talk, character voice, mobile Skype, ad-driven call, and Voice over Internet Protocol (VoIP) call. Non call-related services include, but are not limited to, color SMS, ad-driven SMS, anonymous SMS, credit transfer, Unstructured Supplementary Services Data (USSD) call back, and USSD call me.

In an exemplary case, for voice SMS service, subscriber A dials the recipient's number B directly from his phone address book. The out-of-band NPVASS intercepts the call control associated with the call and sends the message to subscriber A on a separate channel, to prompt subscriber A to indicate his service selection, by presenting a user interactive menu in the message. The separate channel is established in parallel with the voice circuit. In an exemplary case, subscriber A may send "1" as a postfix P, corresponding to the voice SMS service to the out-of-band NPVASS. The out-of-band NPVASS then initiates the voice SMS service application. Subscriber A then enters voice SMS content in reply to the message sent by NPVASS, over a voice circuit associated with the call. Finally, the voice SMS service application sends a notification to the recipient that the recipient has a voice SMS from subscriber A. The recipient can retrieve the voice SMS as per his convenience.

In another exemplary case, subscriber A dials the recipient's number B from a received calls list. The out-of-band NPVASS intercepts the call control associated with the call and sends the message to subscriber A on a separate channel, to prompt the subscriber A to indicate his service selection, by presenting a user interactive menu in the message. The subscriber then selects the color SMS service by sending a postfix, such as "222", to the out-of-band NPVASS. Thereafter, the out-of-band NPVASS initiates a color SMS service application. The out-of-band NPVASS sends an SMS to the subscriber to reply with content corresponding to the color SMS service. Then, out-of-band NPVASS forwards the received content to the color SMS service application, which in turn translates the SMS content into an MMS message and delivers the same to recipient B.

FIG. 8 shows a schematic diagram of a mobile handset associated with the subscriber 102, for displaying a user interactive menu for providing out-of-band NPVAS to the subscriber, in accordance with an embodiment of the invention. The subscriber's mobile handset includes a user interface that facilitates him to select one or more VAS. The user interface includes a display unit 802, one or more soft keys 804, and a keypad 806. The display unit 802 renders a user interactive menu, which prompts the subscriber to indicate his service selection, when the subscriber initiates a call to a called number of the recipient without any prefix. The user interactive menu is sent in an OOB message on a separate channel, which is established in parallel with a voice circuit associated with the call. The display unit 802 is divided into two portions: a first portion of display unit 808, and a second portion of display unit 810. First portion of display unit 808 displays one or more indications of service selection and corresponding one or more service options. The service options correspond to value added services. The user interactive menu may be ended with an end key. Second portion of display unit 810 displays one or more context sensitive function labels for making the indication of service selection. Each of the context sensitive function labels has a corresponding soft key 804, to access the displayed context sensitive function label. A keypad 806 consists of a plurality of fixed-label keys, which are provided for entering telephone numbers, entering indication of service selection, and any other Dual Tone Multi-Frequency (DTMF) signals.

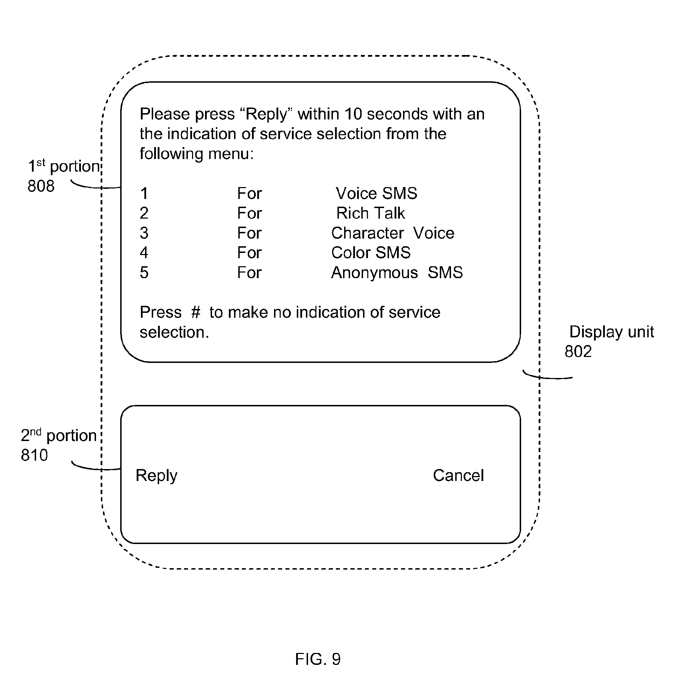

The user interactive menu may be embedded in one of, but not limited to, a Short Message Service (SMS), an Unstructured Supplementary Service Data (USSD) message, an Instant Message (IM), a Push to talk (PTT) message, an Hypertext Transfer Protocol (HTTP) push message and a Uniform Resource Locator (URL). FIG. 9 depicts a screenshot for displaying user interactive menu embedded in a network-pushed Short Message Service (SMS), in accordance with an embodiment of the invention. The user interactive menu displays one or more Value Added Services. In an embodiment of the present invention, only the VAS preferred by the subscriber may be displayed in the user interactive menu. For instance, the subscriber may be presented with five value added services, as shown in Fig. 9. First portion of display unit 808 displays the five indications of service selection and corresponding service options for the value added services. The user interactive menu may display value added services for both call-related applications and non-call related applications. Second portion of display unit 810 displays two context sensitive function labels, namely "reply" and "cancel", allowing the subscriber to select or reject any indication. When the subscriber gets the user interactive menu, he can select a VAS, by pressing the fixed label key from keypad 806 corresponding to the displayed service option. In case the user does not wish to use any value added service, the user interactive menu further includes an indication corresponding to end key (#), which leads to a normal call to the recipient. For instance, if the subscriber intends to select a "Voice SMS" service option, the subscriber is required to press "1" on the fixed label key from keypad 806 and thereafter, presses soft key corresponding to the context sensitive function label "reply". This reply to the OOB message is sent to IS 104, which further processes the call accordingly.

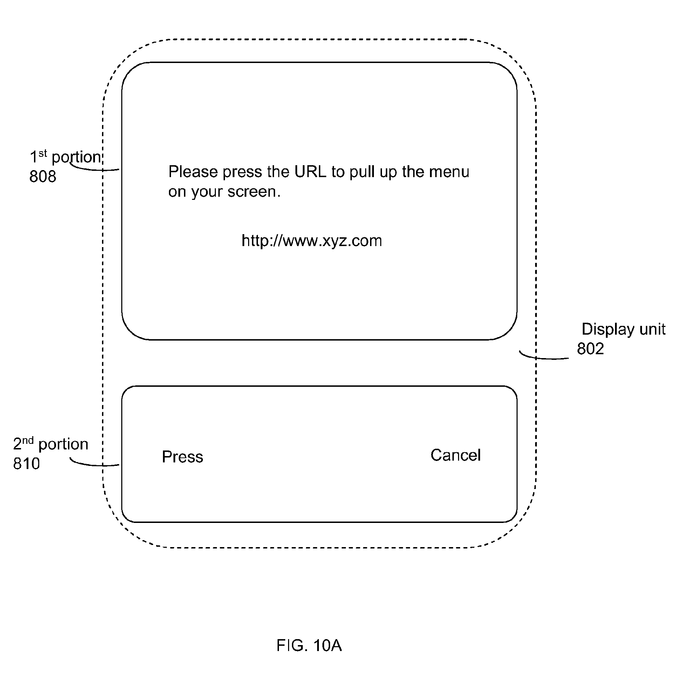

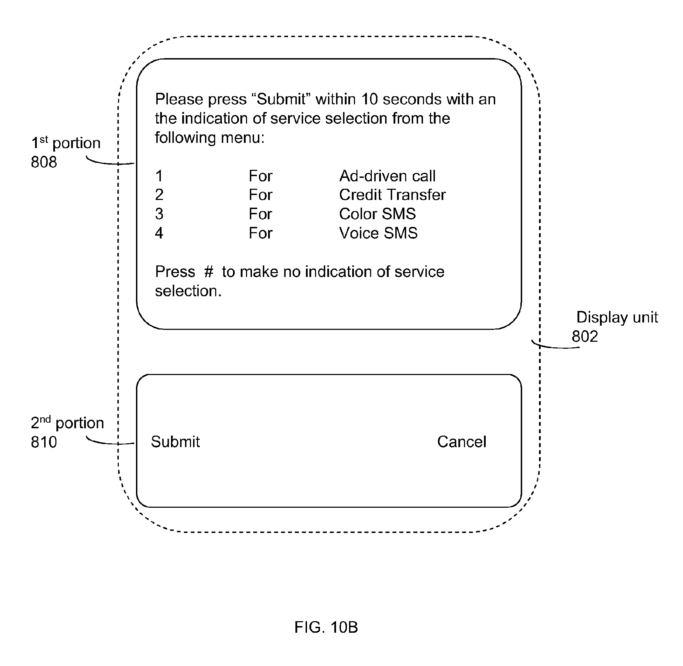

As explained earlier, the subscriber may also be presented with the user interactive menu embedded in any other message. FIGS. 10A and 10B depict a screenshot for displaying a user interactive menu embedded in a Wireless Application Protocol (WAP) push message, in accordance with an embodiment of the invention. In such a case, first portion of the display unit 808 displays a WAP-push message that contains a Uniform Resource Locator (URL), and a second portion of display unit 810 displays two context sensitive function labels, namely "Press" and "Cancel", for pulling the user interactive menu on display unit 802, or canceling the option of entering the indication, respectively. In one case, the subscriber presses the soft key corresponding to "press" to pull the user interactive menu. Thereafter, the URL pulls the user interactive menu as WAP content via subscriber's GPRS, as shown in FIG.10B. The WAP content forming the user interactive menu is displayed on first portion of display unit 808. The user interactive menu displays the four indications of service selection and corresponding service options. Second portion of display unit 810 displays two context sensitive function labels, namely "select" and "submit", for making the indication of service selection, in accordance with an embodiment of the invention. The subscriber can select a VAS of his interest. For instance, if the subscriber intends to send a "Color SMS" to the recipient, he presses "3" on the fixed pad as the service option. Thereafter, subscriber submits the same to IS 104, by using the soft key 804 corresponding to "submit" context sensitive function label.

It will be apparent to a person skilled in that art that the user interactive menu may also be embedded in other messages. It is only for the sake of clarity that SMS and WAP push message have been explained in conjunction with Figs. 9, 10A, and 10B.

It will be apparent to a person skilled in the art, that the out-of-band NPVAS service can also be applied to CDMA/ANSI-41D, and other technologies such as, but not limited to, VoIP, WiFi, 3GSM and inter-standard roaming. For example, a CDMA roaming subscriber may be traveling with an HPMN CDMA handset. Another example is a CDMA roaming subscriber traveling with an HPMN GSM SIM and a GSM handset. Yet another example is a GSM roaming subscriber traveling with an HPMN CDMA RUIM and a CDMA handset.

An exemplary list of the mapping between GSM MAP and ANSI41D is described as a reference.

| **GSM** | **ANSI 41D** |
|---|---|
| IDP | ORREQ |
| CTR | CONNRES |
| CON/CUE | orreq |
| ERB (Disconnect) | ODISCONNECT |
| ERB (Answer) | OANSWER |

The present invention can take the form of an entirely hardware embodiment, an entirely software embodiment or an embodiment containing both hardware and software elements. In accordance with an embodiment of the present invention, software including but is not limited to firmware, resident software, and microcode, implements the invention.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CDROM), compact disk - read/write (CD-R/W) and Digital Versatile Disk (DVD).

A computer usable medium provided herein includes a computer usable program code, which when executed, intercepts a call control associated with a call from the subscriber to a recipient, at an Interceptor unit, while a voice circuit associated with the call is connected and held at a switch. The subscriber calls a recipient's number without any prefix. The computer program product further includes a computer usable program code, for sending a message by an intelligent interactive unit to the subscriber on a separate channel, to prompt the subscriber to indicate his service selection, by presenting a user interactive menu in the message. A separate channel is established in parallel with the voice circuit. The computer program product further includes a computer usable program code, for sending by the intelligent voice interactive unit, the indication of service selection, received in an acknowledgment to the message, to the Interceptor unit. The computer program product further includes a computer usable program code for determination by the Interceptor unit, of a service application, using the indication of the service selection, wherein the service application is a value added service.

The out-of-band NPVAS system facilitates value added services to a subscriber, without a need for the subscriber to dial a recipient's number with a prefix corresponding to a value added service the subscriber wishes to obtain. This allows the subscriber to make a call to the recipient directly from his phone address book, or phone number list (e.g. a missed calls list, a received calls list, a dialed numbers list) or phone pad. Furthermore, the out-of-band NPVAS system is able to send a message to the subscriber to prompt the subscriber to select a value added service, by presenting a user interactive menu in the message, with postfixes corresponding to value added services listed in the user interactive menu. This gives a better user experience to the subscriber, as the subscriber does not need to remember the postfixes for the value added services. He can select the postfixes by looking at the menu on his mobile screen. The subscriber may be registered in an HPMN or may be roaming in a VPMN. In addition, an operator deploying the out-of-band NPVAS system need not change existing prefix based value added service solutions deployed by the operator. The out-of-band NPVAS is able to convert the postfix into a prefix corresponding to the existing prefix based value added service solutions. Furthermore, the out-of-band NPVAS system is able to utilize existing subscription trigger profile of the subscriber to facilitate the NPVAS. The out-of-band NPVAS can facilitate both call-related as well as non call-related value added services.

The components of out-of-band NPVAS system described above include any combination of computing components and devices operating together. The components of the out-of-band NPVAS system can also be components or subsystems within a larger computer system or network. The out-of-band NPVAS system components can also be coupled with any number of other components (not shown), for example, other buses, controllers, memory devices, and data input/output devices, in any number of combinations. In addition, any number or combination of other processor-based components may be carrying out the functions of the out-of-band NPVAS system.

It should be noted that the various components disclosed herein may be described using computer aided design tools, and/or expressed (or represented) as data and/or instructions, embodied in various computer-readable media, in terms of their behavioral, register transfer, logic component, transistor, layout geometries, and/or other characteristics. Computer-readable media, in which such formatted data and/or instructions may be embodied, include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole, and not to any particular portions of this application. When the word "or" is used in reference to a list of two or more items, that word covers all of the following interpretations of the word: any of the items in the list, all of the items in the list, and any combination of the items in the list.

The above description of illustrated embodiments of the out-of-band NPVAS system is not intended to be exhaustive or to limit the out-of-band NPVAS system to the precise form disclosed. While specific embodiments of, and examples for, the out-of-band NPVAS system are described herein for illustrative purposes, various equivalent modifications are possible within the scope of the out-of-band NPVAS system, as those skilled in the art will recognize. The teachings of the out-of-band NPVAS system provided herein can be applied to other processing systems and methods. They may not be limited to the systems and methods described above.

The elements and acts of the various embodiments described above can be combined to provide further embodiments. These and other changes can be made to the out-of-band NPVAS system in light of the above detailed description.

### Other Variations

Provided above for the edification of those of ordinary skill in the art, and not as a limitation on the scope of the invention, are detailed illustrations of a scheme for providing out-of-band non-prefix based value added services to a subscriber. Numerous variations and modifications within the spirit of the present invention will of course occur to those of ordinary skill in the art in view of the embodiments that have been disclosed. For example, the present invention is implemented primarily from the point of view of GSM mobile networks as described in the embodiments. However, the present invention may also be effectively implemented on GPRS, 3G, CDMA, WCDMA, WiMax etc., or any other network of common carrier telecommunications in which end users are normally configured to operate within a "home" network to which they normally subscribe, but have the capability of also operating on other neighboring networks, which may even be across international borders.

The examples under the present invention out-of-band Non-prefix based Value Added Service (NPVAS) system detailed in the illustrative examples contained herein are described using terms and constructs drawn largely from GSM mobile telephony infrastructure. However, use of these examples should not be interpreted as limiting the invention to those media. out-of-band non-prefix based value added service system - a method for providing value added services to a subscriber can be of use and provided through any type of telecommunications medium, including without limitation: (i) any mobile telephony network including without limitation GSM, 3GSM, 3G, CDMA, WCDMA or GPRS, satellite phones or other mobile telephone networks or systems; (ii) any so-called WiFi apparatus normally used in a home or subscribed network, but also configured for use on a visited or non-home or non-accustomed network, including apparatus not dedicated to telecommunications such as personal computers, Palm-type or Windows Mobile devices; (iii) an entertainment console platform such as Sony Play station, PSP or other apparatus that are capable of sending and receiving telecommunications over home or non-home networks, or even (iv) fixed-line devices made for receiving communications, but capable of deployment in numerous locations while preserving a persistent subscriber id such as the eye2eye devices from Dlink; or telecommunications equipment meant for voice over IP communications such as those provided by Vonage or Packet8.

In describing certain embodiments of the out-of-band NPVAS system under the present invention, this specification follows the path of a telecommunications call, from a calling party to a called party. For the avoidance of doubt, such a call can be a normal voice call, in which the subscriber telecommunications equipment is also capable of visual, audiovisual or motion-picture display. Alternatively, those devices or calls can be for text, video, pictures or other communicated data.

In the foregoing specification, specific embodiments of the present invention have been described. However, one of ordinary skill in the art will appreciate that various modifications and changes can be made without departing from the scope of the present invention as set forth in the claims below. Accordingly, the specification and the figures are to be regarded in an illustrative rather than a restrictive sense, and all such modifications are intended to be included within the scope of present invention. The benefits, advantages, solutions to problems, and any element(s) that may cause any benefit, advantage, or solution to occur, or to become more pronounced, are not to be construed as a critical, required, or essential feature or element of any or all of the claims.

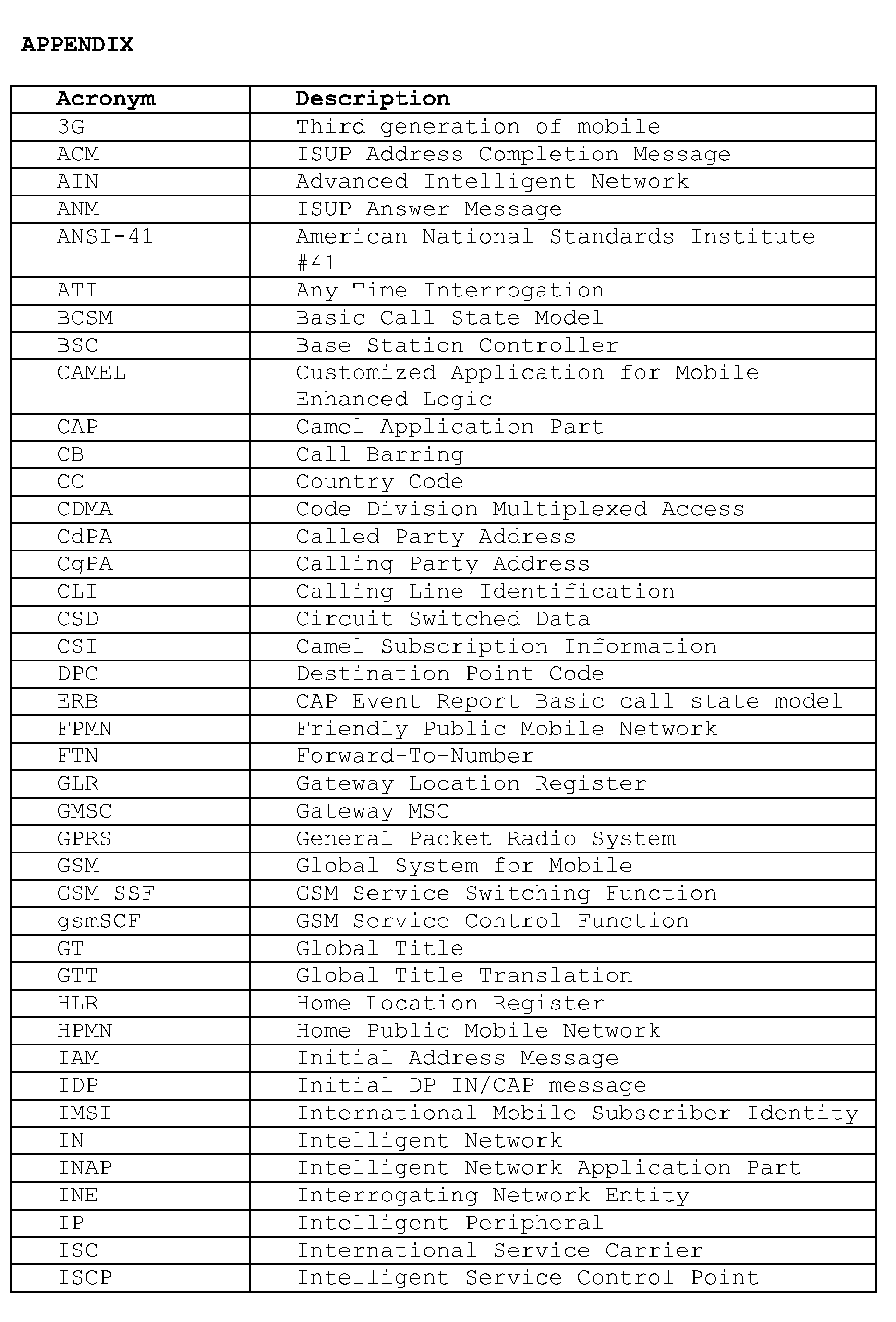

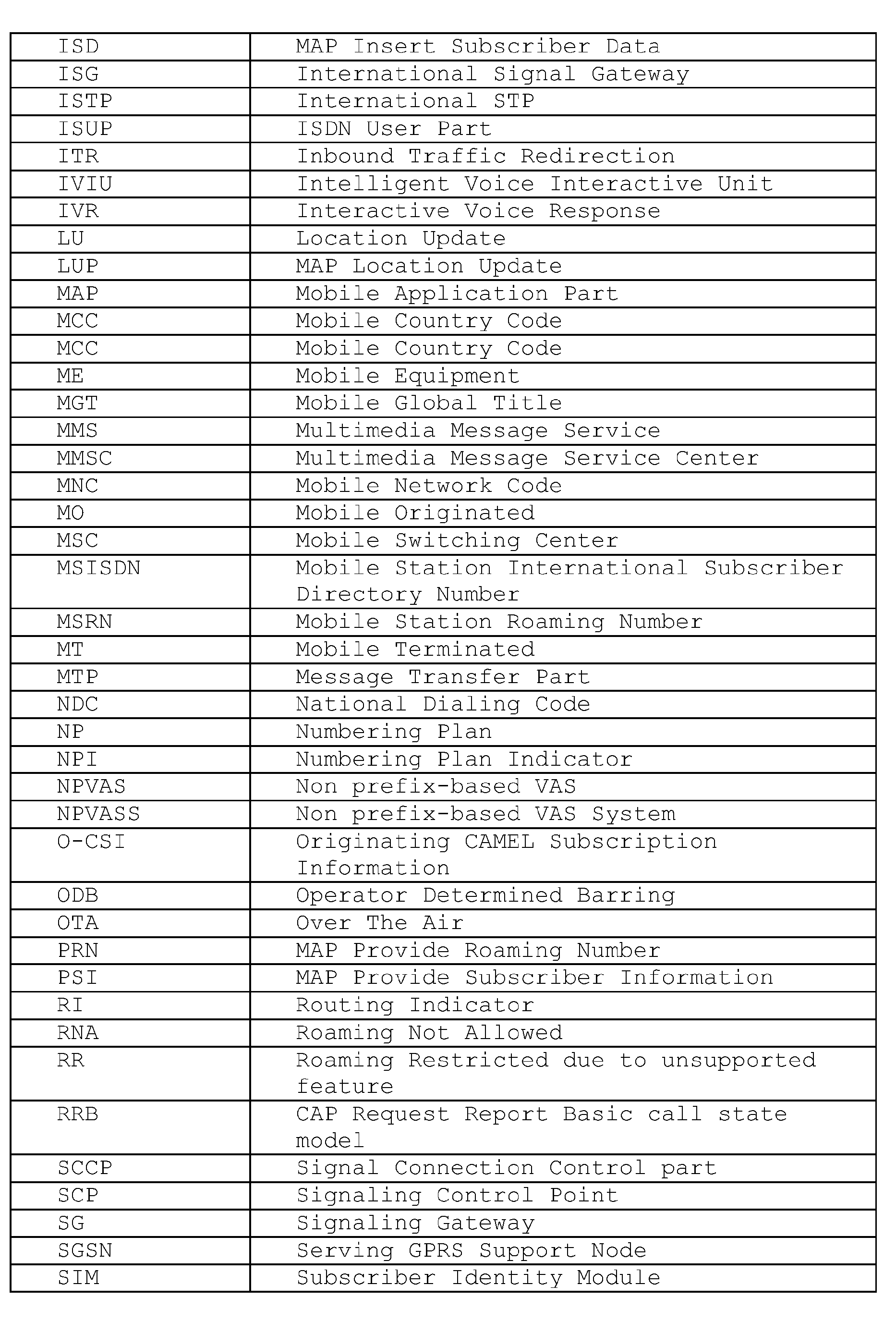

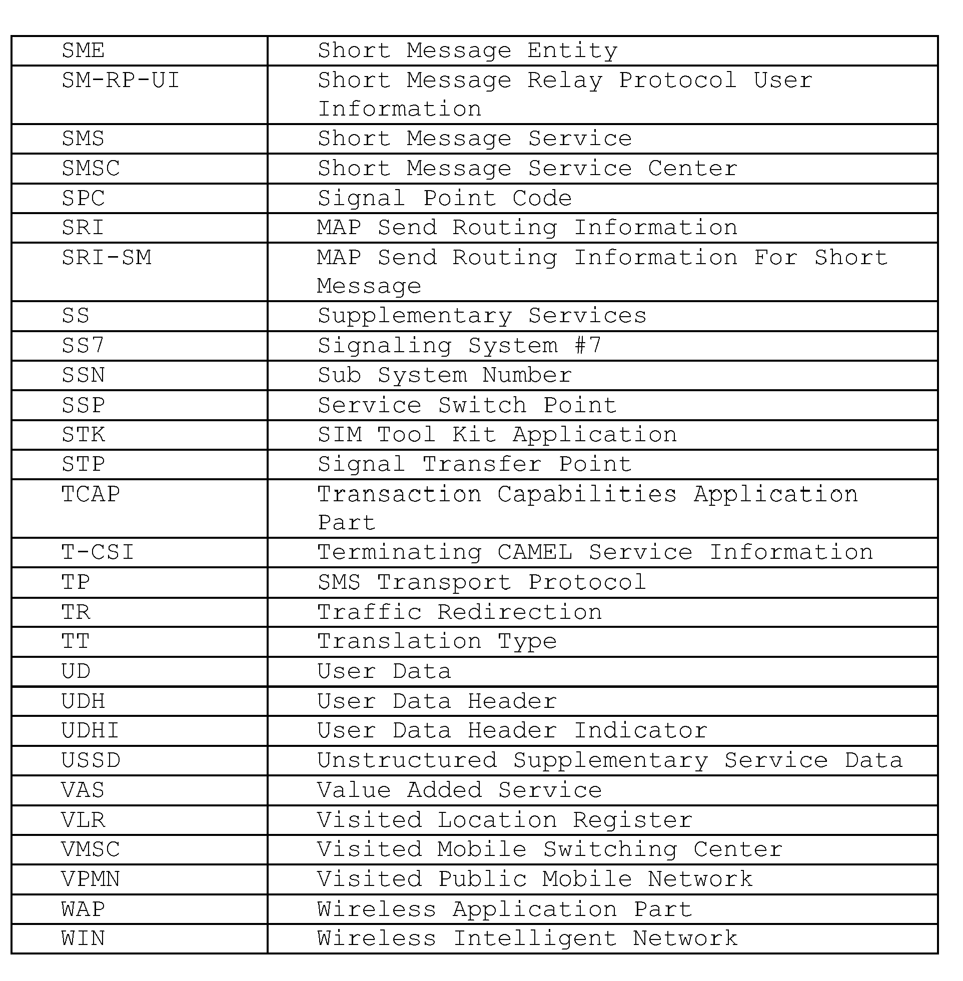

### Technical references, each of which is incorporated by reference herein:

GSM 378 on CAMEL
   Digital cellular telecommunications system (Phase 2+); Customised Applications for Mobile network Enhanced Logic (CAMEL) Phase 2;
   Stage 2
   (GSM 03.78 version 6.7.0 Release 1997)
GSM 978 on CAMEL Application protocol
   Digital cellular telecommunications system (Phase 2+); Customised Applications for Mobile network Enhanced Logic (CAMEL);
   CAMEL Application Part (CAP) specification
   (GSM 09.78 version 7.1.0 Release 1998)
Q761-Q730 on ISUP Signaling, Function and Procedure
Q.761 (Functional description of the ISDN User Part of CCITT Signaling System No. 7)
Q.762 (General functions of CCITT Signaling System No. 7 ISDN User Part Messages and parameters)
Q.763 (Formats and codes of CCITT Signaling System No. 7 ISDN User Part Messages and parameters)
Q.764 (1999), Signaling System No. 7 - ISDN User Part signaling procedures
Q.763 (1999), Signaling System No. 7 - ISDN User Part formats and codes
Q.730 (1999), ISDN User Part supplementary services
Q.711 (1996), Functional description of signaling connection control part
Q.712 (1996), Definition and function of signaling connection control part messages
Q.713 (1996), Signaling connection control part formats and codes
Q.714 (1996), Signaling connection control part procedures
Q.716 (1993), Signaling Connection Control Part (SCCP) performance
GSM 340 on SMS
   Digital cellular telecommunications system (Phase 2+); Technical realization of the Short Message Service (SMS);
   (GSM 03.40 version 7.4.0 Release 1998)
SMPP Forum: SMPP Protocol Document Version:- 12-Oct-1999 Issue 1.2
Universal Mobile Telecommunications System (UMTS); Multimedia Messaging Service (MMS), Functional description; Stage 2
   (3GPP TS 23.140 version 4.2.0 Release 4)
GSM 902 on MAP specification
   Digital cellular telecommunications system (Phase 2+); Mobile Application Part (MAP) Specification
   (3GPP TS 09.02 version 7.9.0 Release 1998)
GSM 340 on SMS
Digital cellular telecommunications system (Phase 2+); Technical realization of the Short Message Service (SMS);
   (GSM 03.40 version 7.4.0 Release 1998)
GSM 378 on CAMEL
   Digital cellular telecommunications system (Phase 2+); Customised Applications for Mobile network Enhanced Logic (CAMEL) Phase 2;
   Stage 2
   (GSM 03.78 version 6.7.0 Release 1997)
GSM 978 on CAMEL Application protocol
   Digital cellular telecommunications system (Phase 2+); Customised Applications for Mobile network Enhanced Logic (CAMEL);
   CAMEL Application Part (CAP) specification
   (GSM 09.78 version 7.1.0 Release 1998)
Technical Specification
   3rd Generation Partnership Project;
   Technical Specification Group Services and System Aspects; Service accessibility
   (Release 1999)
Signalling procedures and the Mobile Application Part (MAP)
   (Release 1999)
Q1214-Q1218 On Intelligent Networks
   IMS architectures, 3GPP, and 3GPP2
Converse Patent
Kirusa Patent
Color and session-based Voice SMS and Video SMS patent

## Claims

1. A method for providing value added services to a subscriber of a mobile communications network, the method comprising:
intercepting a communication from the subscriber;
providing a prompt for service selection to the subscriber;
receiving an indication of service selection; and
determining a service application based on the received indication of service selection;
wherein the communication from the subscriber and the prompt for service selection are provided over separate channels.

2. The method of claim 1, wherein the mobile communications network has an interceptor unit; wherein the communication from the subscriber comprises a non-prefix communication from the subscriber; wherein the indication of service selection is received from the subscriber at the interceptor unit; and wherein the service application is a non-prefix based value added service.

3. The method of claim 2, further comprising:
initiating the service application.

4. The method of any of claims 2-3, wherein the prompt for service selection is received over an out-of-band channel.

5. The method of any of claims 2-4, wherein the separate channels are functional in parallel.

6. The method of any of claims 2-5, wherein the non-prefix based value added service is related to the non-prefix communication.

7. The method of any of claims 2-5, wherein the non-prefix based value added service is unrelated to the non-prefix communication.

8. The method of any of claims 2-7, wherein the non-prefix communication has an associated voice circuit, and wherein intercepting a non-prefix communication includes:
intercepting the associated voice circuit; and
holding the intercepted voice circuit for a pre-defined time interval.

9. The method of claim 8, wherein the associated voice circuit is intercepted at a switch.

10. The method of any of claims 2-9, further comprising:
at the interceptor unit, applying a filtering criterion to the non-prefix communication.

11. The method of any of claims 2-10, wherein the non-prefix communication is initiated using a telephone number received from a group consisting of an address book, a number list, and a telephone pad.

12. The method of any of claims 2-11, wherein the interceptor unit is an Intelligent Service Control Point.

13. The method of any of claims 2-12, wherein the prompt for service selection is an interactive menu.

14. The method of any of claims 2-13, wherein a standby interceptor unit is provided for failover support.

15. The method of any of claims 2-14, further comprising:
providing a prompt for carrier selection code to the subscriber.

16. The method of claim 1, wherein the communication from the subscriber comprises a communication request from the subscriber, including an indication of a destination of the communication request; wherein the prompt comprises an option for selection of a communications service to the subscriber; and wherein the method further comprises:
operating a service application based on the received indication of service selection of the communications service.

17. The method of claim 16, wherein the service application is voice Short Message Service.

18. The method of claim 16, wherein the service application is adding media to a subscriber communication.

19. The method of claim 16, wherein the service application is monitoring a communications session for voice analysis.

20. The method of claim 16, wherein the service application is monitoring a voice communications session to detect lies.

21. The method of claim 16, wherein the service application is monitoring a voice communications session for emotion.

22. The method of claim 16, wherein the service application is analyzing the language of a text message for meaning and adding media to that text message according to the meaning.

23. The method of claim 16, wherein the service application is recognizing music.

24. The method of any of claims 16-23, wherein the option is a visual indication of service selection choices.

25. The method of any of claims 16-23, wherein the option is an audible prompt.

26. The method of any of claims 16-25, wherein the indication of selection is a character entered on the subscriber's handset.

27. The method of any of claims 16-25, wherein the indication of selection is spoken by the subscriber.

28. A computer program product comprising computer readable program code means for causing a computer to perform all the steps of any of claims 1-27.

29. The computer program product of claim 28 embodied on a computer usable medium.

30. A system for providing value added services to a subscriber of a mobile communications network, the system comprising:
means for intercepting a communication from the subscriber;
means for providing a prompt for service selection to the subscriber;
means for receiving an indication of service selection; and
means for determining a service application based on the received indication of service selection;
wherein the communication from the subscriber and the prompt for service selection are provided over separate channels.

31. The system of claim 30, wherein the mobile communications network has an interceptor unit; wherein the communication from the subscriber comprises a non-prefix communication from the subscriber; wherein the indication of service selection is received from the subscriber at the interceptor unit; and wherein the service application is a non-prefix based value added service.

32. The system of claim 31, further comprising:
means for initiating the service application.

33. The system of claim 31 or 32, wherein the prompt for service selection is received over an out-of-band channel.

34. The system of any of claims 31-33, wherein the separate channels are functional in parallel.

35. The system of any of claims 31-34, wherein the non-prefix based value added service is related to the non-prefix communication.

36. The system of any of claims 31-34, wherein the non-prefix based value added service is unrelated to the non-prefix communication.

37. The system of any of claims 31-36, wherein the non-prefix communication has an associated voice circuit, and wherein the means for intercepting a non-prefix communication includes:
means for intercepting the associated voice circuit; and
means for holding the intercepted voice circuit for a pre-defined time interval.

38. The system of claim 37, wherein the associated voice circuit is intercepted at a switch.

39. The system of any of claims 31-38, further comprising:
means for applying a filtering criterion to the non-prefix communication.

40. The system of any of claims 31-39, wherein the non-prefix communication is initiated using a telephone number received from a group consisting of an address book, a number list, and a telephone pad.

41. The system of any of claims 31-40, wherein the interceptor unit is an Intelligent Service Control Point.

42. The system of any of claims 31-41, wherein the prompt for service selection is an interactive menu.

43. The system of any of claims 31-42, wherein a standby interceptor unit is provided for failover support.

44. The system of any of claims 31-43, further comprising:
providing a prompt for carrier selection code to the subscriber.

45. The system of claim 30, wherein the communication from the subscriber comprises a communication request from the subscriber, including an indication of a destination of the communication request; wherein the prompt comprises an option for selection of a communications service to the subscriber; and wherein the system further comprises:
means for operating a service application based on the received indication of selection of the communications service.

46. The system of claim 45, wherein the service application is voice Short Message Service.

47. The system of claim 45, wherein the service application is adding media to a subscriber communication.

48. The system of claim 45, wherein the service application is monitoring a communications session for voice analysis.

49. The system of claim 45, wherein the service application is monitoring a voice communications session to detect lies.

50. The system of claim 45, wherein the service application is monitoring a voice communications session for emotion.

51. The system of claim 45, wherein the service application is analyzing the language of a text message for meaning and adding media to that text message according to the meaning.

52. The system of claim 45, wherein the service application is recognizing music.

53. The system of any of claims 45-52, wherein the option is a visual indication of service selection choices.

54. The system of any of claims 45-52, wherein the option is an audible prompt.

55. The system of any of claims 45-54, wherein the indication of selection is a character entered on the subscriber's handset.

56. The system of any of claims 45-54, wherein the indication of selection is spoken by the subscriber.
